# EUROPEAN PATENT APPLICATION

(11) **EP 4 775 605 A1**
(43) Date of publication of application: **15.07.2026**
(21) Application number: 24927676.7
(22) Date of filing: 25.11.2024
(51) Int. Cl.: C08F 220/46, C09J 133/20, H01M 4/13, H01M 4/62, H01M 10/0525, H01M 10/42, H01M 4/139, H01M 4/04

(54) **POLYACRYLATE BINDER AND USE THEREOF, ELECTRODE SHEET AND LITHIUM-ION BATTERY**

(30) Priority: 17.10.2024 CN 202411454068
(71) Applicant: ZHEJIANG LIWINON ENERGY TECHNOLOGY CO., LTD., Jinhua, Zhejiang 321102 (CN)
(72) Inventor: HUANG, Xu, Jinhua, Zhejiang 321102 (CN); WEI, Xiaoliang, Jinhua, Zhejiang 321102 (CN); TAN, Yuangao, Jinhua, Zhejiang 321102 (CN); WU, Shengben, Jinhua, Zhejiang 321102 (CN); XIANG, Haibiao, Jinhua, Zhejiang 321102 (CN)
(74) Representative: Appleyard Lees IP LLP
(86) International application number: PCT/CN2024/134236
(87) International publication number: WO 2026/081299

(57) **Abstract**

The present disclosure discloses a polyacrylate-based binder and use thereof, an electrode sheet, and a lithium-ion battery. The present disclosure relates to the technical field of secondary battery materials. The polyacrylate-based binder provided by the present disclosure achieves good adhesion performance by regulating the molecular weight and the contents of cyano, ester, and carboxylate groups in the molecular chain of the binder. It also allows for the adjustment of the electrolyte uptake rate of the binder. Furthermore, the binder is harmless to humans, environmentally friendly, and low in cost. By introducing the binder as a raw material for the aqueous safety coating in the electrode sheet, its excellent adhesion performance allows the aqueous safety coating to firmly adhere to the surface of the current collector of the electrode sheet, which reduces surface contact resistance and enhances the safety of the battery cell. Furthermore, by limiting the contents of cyano, ester, and carboxylate groups in the molecular chain of the binder, the rate capability and high and low-temperature discharge performance of the battery cell can be significantly enhanced, thereby improving the safety performance and cycling performance of the battery.

## Description

### TECHNICAL FIELD

The present disclosure belongs to the technical field of secondary battery materials, and in particular relates to a polyacrylate-based binder and use thereof, an electrode sheet, and a lithium-ion battery.

### BACKGROUND

Lithium-ion batteries are widely used in products such as 3C electronics, electric vehicles, and power tools due to their advantages of high energy density, no memory effect, long cycle life, environmental friendliness, and adaptability to various environments. In practical applications, one of the commonly used measures to enhance battery safety performance is to introduce a safety coating into the electrode sheets of the batteries.

In related technologies, safety coatings generally contain a certain proportion of inorganic fillers, conductive agents, and binders. At present, the commonly used binder is polyvinylidene fluoride (PVDF). However, PVDF binders have several shortcomings: (1) performance: the adhesion provided by PVDF primarily relies on intermolecular van der Waals forces, leading to insufficient adhesion in safety coatings using PVDF; (2) cost and source: currently, high-performance PVDF is expensive and has limited sources, significantly increasing the manufacturing costs of electrode sheets; (3) environmental friendliness: the use of PVDF requires highly volatile organic solvents such as NMP (N-methylpyrrolidone), which not only pollutes the environment but is also harmful to human health. Additionally, the use of NMP further increases material costs and the corresponding recycling and disposal costs.

Therefore, it is of significant importance to address the issues of insufficient adhesion, high costs, limited sources, and environmental unfriendliness associated with current binder, and provide a binder which is good in adhesion performance, environmentally friendly, cost-effective, and can effectively improve battery safety performance and cycling performance.

### SUMMARY

The present disclosure aims at solving at least one of the technical problems existing in the prior art described above. Therefore, the present disclosure provides a polyacrylate-based binder and use thereof, an electrode sheet, and a lithium-ion battery. The present disclosure aims at addressing the issues of insufficient adhesion, high costs, limited sources, and environmental unfriendliness of current binders.

According to a first aspect of the present disclosure, a polyacrylate-based binder is provided. The polyacrylate-based binder has a structural formula of 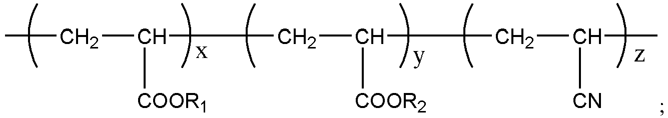 wherein R₁ is independently selected from the group consisting of H, Li, and Na each time it appears; R₂ is independently selected from a substituted or unsubstituted C₁-C₁₀ alkyl each time it appears; and
5 ≤ (x + z) / y ≤ 20, 1.2 ≤ z / x ≤ 2, where x, y, and z are all not equal to 0.

The polyacrylate-based binder according to the embodiments of the present disclosure has at least the following beneficial effects: the polyacrylate-based binder provided by the present disclosure achieves good adhesion performance by limiting the contents of cyano (-CN), ester (-COOR₂), and carboxylate (-COOR₁) groups in the molecular chain of the binder. The binder is water-soluble and the solvent is water. The binder does not require harmful organic solvents such as N-methyl pyrrolidone (NMP), and is harmless to humans and environmentally friendly. The binder is abundant in supply, low in cost, and can be widely used in industrial production. By introducing the binder as a raw material for the aqueous safety coating in the electrode sheet, its excellent adhesion performance allows the aqueous safety coating to firmly adhere to the surface of the current collector of the electrode sheet, which not only decreases surface contact resistance but also reduces the generation of burrs on the current collector during safety testing of the battery cell. This reduces the risk of short circuit between the burrs on the current collector and the unstable active materials in a charged state, thereby enhancing the safety of the battery cell. Furthermore, by limiting the molecular weight and the contents of cyano, ester, and carboxylate groups in the molecular chain of the binder, the electrolyte uptake rate of the binder can be adjusted, and the rate capability and high and low-temperature discharge performance of the battery cell can be significantly enhanced, thereby improving the safety performance and cycling performance of the battery.

The binder provided by the present disclosure contains molecular chains with cyano (-CN, which has a quantity accounting for n₁ in all side-chain groups, where n₁ = z / (x + y + z)), carboxylate group (-COOR₁, where R₁ is independently selected from the group consisting of H, Li, and Na each time it appears, which has a quantity accounting for n₂ in all side-chain groups, where n₂ = x / (x + y + z)), and ester group (-COOR₂, where R₂ is independently selected from a substituted or unsubstituted C₁-C₁₀ alkyl each time it appears, which has a quantity accounting for n₃ in all side-chain groups, where n₃ = y / (x + y + z)), and n₁ + n₂ + n₃ = 1.
- CN is a strongly polar group with good affinity for electrolytes and excellent electrochemical stability, which can provide strong adhesion. However, this group has significant rigidity, making it unable to accommodate the large volume changes during the intercalation / deintercalation of lithium ions in active materials.
- COOR₁ carries a negative charge, and the mutual repulsion between them aids in the extension of the binder molecules and promotes the uniform dispersion of the conductive agent. Additionally, it can regulate the swelling degree of the binder in the electrolyte solvent, and reduce the erosion of the binder by the electrolyte, thus better maintaining adhesion capacity and adhesion effectiveness.
- COOR₂ has polarity and solubility parameters close to those of carbonate solvents in the electrolyte, facilitating moderate absorption of the electrolyte by the binder. This absorption plasticizes the binder, imparting elasticity and flexibility to accommodate the periodic volume changes of the electrode active materials during the charging and discharging processes as lithium ions intercalate and deintercalate. Furthermore, the absorption of the electrolyte also enhances the ionic conductivity of the aqueous safety coating, thereby promoting the improvement of low-temperature discharge performance of the battery cell.

The binder is an essential component for maintaining the integrity of the electrode sheet and is crucial for improving the specific capacity and cycling stability of the battery. Polyacrylic acid is used as a binder for cathodes and anodes of the lithium battery due to its numerous polar functional groups, water solubility, and good adhesion. However, the polar groups of polyacrylic acid lead to the formation of hydrogen bonds between molecular chains to increase chain rigidity, which is detrimental to maintaining the integrity of the electrode sheet during the charging and discharging processes. Therefore, it is imperative to control the number of functional groups in polyacrylic acid, change the types of functional groups, and modify the molecular chain structure of polyacrylic acid to improve the electrochemical performance of lithium batteries. The present disclosure limits the contents of cyano, ester, and carboxylate groups in the molecular chain of the binder as follows: (1) limiting 1.2 ≤ z / x ≤ 2, i.e., n₁ and n₂ satisfy 1.2 ≤ n₁ / n₂ ≤ 2; when n₁ / n₂ < 1.2, it may easily lead to insufficient adhesion of the binder; when n₁ / n₂ > 2, the molecular chain tends to coil, which is unfavorable for the dispersion of the conductive agent, making the binder more susceptible to swelling by the electrolyte; (2) limiting 5 ≤ (x + z) / y ≤ 20, i.e., n₁, n₂, and n₃ satisfy 5 ≤ (n₁ + n₂) / n₃ ≤ 20; when (n₁ + n₂) / n₃ < 5, the binder contains excessive - COOR₂, which causes the binder to absorb excessive electrolyte, leading to a rapid decline in adhesion, poor elasticity, and deteriorated battery cell performance; when (n₁ + n₂) / n₃ > 20, the content of -COOR₂ in the binder is too low, resulting in insufficient elasticity, low ionic conductivity of the aqueous safety coating, and significant reduction in the low-temperature discharge performance and rate discharge performance of the battery cell. Ultimately, the present disclosure achieves good adhesion of the binder and regulates the electrolyte uptake rate of the binder by regulating the contents of cyano, ester, and carboxylate groups in the molecular chain of the binder, thereby enhancing the rate capability and high and low-temperature discharge performance of the battery cell.

In some embodiments of the present disclosure, R₂ is independently selected from the group consisting of C₁-C₁₀ linear alkyl, C₁-C₁₀ branched alkyl, and C₁-C₁₀ cycloalkyl. Preferably, R₂ is C₁-C₁₀ linear alkyl, and more preferably, R₂ is C₁-C4 alkyl.

In some embodiments of the present disclosure, a weight average molecular weight M_{w} of the polyacrylate-based binder ranges from 200,000 to 500,000, for example, M_{w} is 200,000, 250,000, 300,000, 350,000, 400,000, 450,000, or 500,000.

In some embodiments of the present disclosure, a number average molecular weight Mₙ of the polyacrylate-based binder ranges from 100,000 to 400,000, for example, Mₙ is 100,000, 150,000, 200,000, 250,000, 300,000, 350,000, or 400,000.

In some embodiments of the present disclosure, a ratio of the weight average molecular weight M_{w} to the number average molecular weight Mₙ satisfies M_{w} / Mₙ ≤ 3, preferably, M_{w} / Mₙ ranges from 1.5 to 1.9.

If the molecular weight of the binder is too low, it not only leads to insufficient adhesion but also increases the application amount of binder. If the molecular weight is too high, it will lead to high viscosity, making processing difficult. If M_{w} / Mₙ > 3, the molecular weight distribution of the binder is too dispersed, resulting in deterioration of the performance of the aqueous safety coating.

In some embodiments of the present disclosure, the electrolyte uptake rate c of the polyacrylate-based binder at 80°C ranges from 10% to 50%, for example, c is 10% to 20%, 20% to 30%, 30% to 40%, or 40% to 50%.

By limiting the contents of cyano, ester, and carboxylate groups in the molecular chain of the binder, the present disclosure achieves the regulation of the electrolyte uptake rate of the binder. The electrolyte uptake rate c of the binder at 80°C satisfies 10% ≤ c ≤ 50%. When c < 10%, the electrolyte absorbed by the binder is insufficient, resulting in poor elasticity, and inability to buffer the periodic volume changes during the intercalation / deintercalation of lithium ions in active materials. In addition, when c < 10%, the ionic conductivity of the aqueous safety coating is low, leading to deterioration of low-temperature discharge performance and rate discharge performance of the battery cell. When c > 50%, the binder absorbs excessive electrolyte, and then causing the aqueous safety coating to swell, reducing adhesion, and increasing internal resistance, which likewise leads to deterioration of battery cell performance.

The above polyacrylate-based binder can be prepared by using conventional methods known in the art, such as, any one selected from the group consisting of emulsion polymerization, solution polymerization, bulk polymerization, and suspension polymerization.

In a specific embodiment, the present disclosure further provides a method for preparing the polyacrylate-based binder, comprising the following steps:
S1: adding a dispersing medium into a reaction vessel, and then deoxygenating the dispersing medium;
S2: adding a certain amount of acrylonitrile, monomer A providing -COOR₁, and monomer B providing -COOR₂ into the reaction vessel according to a ratio of x: y: z;
S3: adding an initiator, and then initiating a reaction by heating;
S4: after the reaction is complete, subjecting a product to filtering, drying, crushing, and sieving to obtain the polyacrylate-based binder.

In some embodiments of the present disclosure, monomer A includes, but is not limited to, at least one selected from the group consisting of acrylic acid, lithium acrylate, and sodium acrylate. The purpose of adding monomer A is to provide -COOR₁, where R₁ is selected from the group consisting of H, Li, and Na. Those skilled in the art may independently choose suitable monomer A as needed. It should be regarded as reasonable variations within the scope of the present disclosure.

In some embodiments of the present disclosure, monomer B includes, but is not limited to, at least one selected from the group consisting of methyl acrylate, ethyl acrylate, and butyl acrylate. Monomer B can also be at least one of C₁-C₁₀ acrylates. The purpose of adding monomer B is to provide -COOR₂, where R₂ is a substituted or unsubstituted C₁-C₁₀ alkyl. Those skilled in the art may independently choose suitable monomer B as needed. It should also be regarded as reasonable variations within the scope of the present disclosure.

In some embodiments of the present disclosure, in step S1, distilled water is added to the reaction vessel, stirring is initiated, and high-purity nitrogen gas is introduced for deoxygenation.

In some embodiments of the present disclosure, in step S2, after adding acrylonitrile, monomer A providing -COOR₁, and monomer B providing -COOR₂, the mixture is heated to 65 °C under an inert atmosphere and maintained at a constant temperature.

In some embodiments of the present disclosure, the initiator includes, but is not limited to, 20% ammonium persulfate.

The second aspect of the present disclosure provides an aqueous safety coating, wherein raw materials of the aqueous safety coating comprise the polyacrylate-based binder, a first conductive agent, and an inorganic filler.

The aqueous safety coating according to the embodiments of the present disclosure has at least the following beneficial effects: the aqueous safety coating provided by the present disclosure can achieve good safety and cycling performance, as well as improved high and low-temperature discharge performance and cycling performance by limiting relevant parameters such as the molecular weight and the contents of cyano, ester, and carboxylate groups in the molecular chain of the binder in the coating. The aqueous safety coating can be introduced into the electrode sheet, which not only improves the safety and cycling performance of the battery but also significantly enhances the high and low-temperature discharge performance and rate discharge performance of the battery.

In some embodiments of the present disclosure, the polyacrylate-based binder accounts for 1 wt% to 24 wt%, preferably 10 wt% to 15 wt% of the aqueous safety coating. When the amount of the binder is <1 wt%, the adhesion of the aqueous safety coating is insufficient, prone to detachment during subsequent use. When the amount of the binder is >24 wt%, it may cause difficulties in processing the aqueous safety coating during gravure printing and also deteriorate the internal resistance of the battery cell.

In some embodiments of the present disclosure, the aqueous safety coating comprises at least one of the following:
A1) a mass ratio of the first conductive agent to the polyacrylate-based binder to the inorganic filler is (0.5 to 5): (1 to 24): (71 to 98.5);
A2) the first conductive agent accounts for 0.5% to 5% by mass of the aqueous safety coating;
A3) the inorganic filler has a median particle size ranging from 0.2 µm to 4 µm, and a specific surface area ranging from 5 m²/g to 50 m²/g;
A4) the raw materials of the aqueous safety coating further comprise a thermally stable active material;
A5) when comprising A4), a mass ratio of the first conductive agent to the polyacrylate-based binder to the inorganic filler to the thermally stable active material is (0.5 to 5): (1 to 24): (1 to 97.5): (1 to 97.5);
A6) when comprising A4), the thermally stable active material comprises one or both of lithium iron phosphate and lithium manganese phosphate.

In some embodiments of the present disclosure, the mass ratio of the first conductive agent to the polyacrylate-based binder to the inorganic filler is (0.5 to 5): (1 to 24): (71 to 98.5). For example, in terms of weight parts, the first conductive agent is 0.5 to 5 parts, preferably 1.5 to 3 parts; the binder is 1 to 25 parts, preferably 10 to 15 parts; and the inorganic filler is 71 to 98.5 parts.

In some embodiments of the present disclosure, the first conductive agent accounts for 0.5% to 5%, preferably 1.5% to 3% by mass of the aqueous safety coating. If the content of the conductive agent is too low, the resistance of the aqueous safety coating film will be too high, resulting in poor cycling performance of the battery cell. If the content is too high, the resistance of the aqueous safety coating film will be too low, resulting in poor safety of the battery cell. When the content of the conductive agent is between 0.5 wt% and 5 wt%, a balance between safety and cycling performance can be achieved.

In some embodiments of the present disclosure, the first conductive agent includes at least one selected from the group consisting of acetylene black, graphene, graphyne, carbon nanotubes, carbon fibers, and conductive carbon black. There are no special requirements for the first conductive agent in present disclosure, and conventional conductive agents in the art, such as conductive carbon black or carbon nanotubes, more specifically, Timcal Conductive Carbon Black, namely SUPER P Li can be used.

In some embodiments of the present disclosure, the inorganic filler is at least one selected from the group consisting of aluminum oxide, boehmite, aluminum hydroxide, magnesium hydroxide, titanium dioxide, silicon dioxide, zirconium oxide, barium titanate, lithium niobate, yttrium-doped zirconium oxide, gadolinium-doped cerium oxide, montmorillonite, aluminosilicate, lithium lanthanum zirconate, lithium lanthanum tantalate, lithium lanthanum niobate, lithium titanium aluminum phosphate, lithium germanium titanium phosphate, and lithium lanthanum titanate. There are no special requirements for the inorganic filler in present disclosure, and conventional inorganic fillers in the art can be used. Considering cost and processability, the inorganic filler can include one or two selected from the group consisting of aluminum oxide, boehmite, aluminum hydroxide, and magnesium hydroxide, preferably boehmite.

In some embodiments of the present disclosure, the inorganic filler has a median particle size Dᵥ₅₀ ranging from 0.2 µm to 4 µm, and a specific surface area ranging from 5 m²/g to 50 m²/g. When the Dᵥ₅₀ of the inorganic filler is less than 0.2 µm and the specific surface area is greater than 50 m²/g, the inorganic filler is prone to agglomeration and difficult to disperse. When the Dᵥ₅₀ is greater than 4 µm and the specific surface area is less than 5 m²/g, it is difficult to obtain a thin safety coating due to the larger particle size, thereby affecting the energy density of the battery cell. When the median particle size and specific surface area of the inorganic filler fall within the above ranges, a good balance can be achieved between the processability of the aqueous safety coating and the energy density of the battery cell.

In some embodiments of the present disclosure, the raw materials of the aqueous safety coating further include a thermally stable active material.

In some embodiments of the present disclosure, the mass ratio of the first conductive agent, the polyacrylate-based binder, the inorganic filler, and the thermally stable active material is (0.5 to 5): (1 to 24): (1 to 97.5): (1 to 97.5).

In some embodiments of the present disclosure, the raw materials of the aqueous safety coating include the above binder, the first conductive agent, the inorganic filler, and the thermally stable active material. The mass ratio satisfies: the first conductive agent: the binder: the inorganic filler: the thermally stable active material = (0.5 to 5): (1 to 24): (1 to 97.5): (1 to 97.5). For example, in terms of weight parts, the first conductive agent is 0.5 to 5 parts, the binder is 1 to 24 parts, the inorganic filler is 1 to 97.5 parts, and the thermally stable active material is 1 to 97.5 parts. In some embodiments of the present disclosure, the thermally stable active material includes one or both of lithium iron phosphate and lithium manganese phosphate.

The third aspect of the present disclosure provides an electrode sheet comprising: a current collector; an active material layer; and the aqueous safety coating. The raw materials of the aqueous safety coating include the polyacrylate-based binder, the first conductive agent, and the inorganic filler.

The electrode sheet according to the embodiments of the present disclosure has at least the following beneficial effects: the present disclosure provides an electrode sheet containing an aqueous safety coating, which achieves good safety and cycling performance, as well as enhances high and low-temperature discharge performance and cycling performance by limiting relevant parameters such as the molecular weight and the contents of cyano, ester, and carboxylate groups in the molecular chain of the binder. Introducing the aqueous safety coating into the electrode sheet not only improves the safety and cycling performance of the battery but also significantly enhances the high and low-temperature discharge performance and rate discharge performance of the battery.

In some embodiments of the present disclosure, the aqueous safety coating is applied on at least one side surface of the current collector, and the active material layer is applied on the side surface of the aqueous safety coating that is away from the current collector and/or on the side surface of the current collector that is away from the aqueous safety coating.

Specifically, the electrode sheet is a cathode sheet, wherein the aqueous safety coating is applied on at least one side surface of the current collector, and the active material layer is applied on the side surface of the aqueous safety coating that is away from the current collector and/or on the side surface of the current collector that is away from the aqueous safety coating.

More specifically, the electrode sheet is a cathode sheet, wherein the aqueous safety coating is applied on both side surfaces of the current collector, and the active material layer is applied on the surface of the aqueous safety coating that is away from the current collector.

In other embodiments of the present disclosure, the active material layer is applied on at least one side surface of the current collector, while the aqueous safety coating is applied on the side surface of the active material layer that is away from the current collector and/or on the side surface of the current collector that is away from the active material layer.

Specifically, the electrode sheet is an anode sheet, wherein the active material layer is applied on at least one side surface of the current collector, and the aqueous safety coating is applied on the side surface of the active material layer that is away from the current collector and/or on the side surface of the current collector that is away from the active material layer.

More specifically, the electrode sheet is an anode sheet, wherein the active material layer is applied on both side surfaces of the current collector, and the aqueous safety coating is applied on the surface of the active material layer that is away from the current collector.

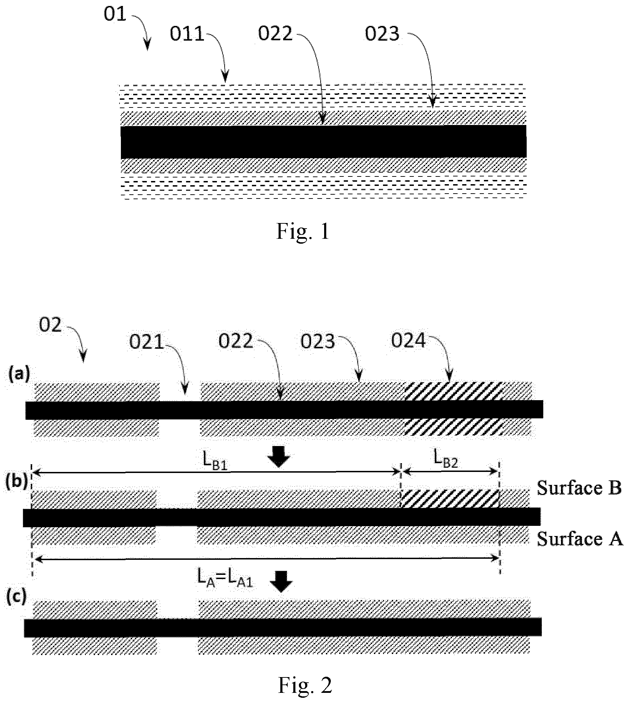

The electrode sheet provided by the present disclosure can be used as either a cathode sheet or an anode sheet, preferably a cathode sheet. When used as a cathode sheet, the aqueous safety coating is closer to the current collector, and the structure is "current collector - aqueous safety coating - active material layer," as shown in Fig. 1. In Fig. 1, the cathode sheet 01 includes the following structures: current collector 022; aqueous safety coating 023, provided on at least one surface of the current collector 022; active material layer 011, provided on the surface of the aqueous safety coating 023 that is away from the current collector 022. When used as an anode sheet, the active material layer is closer to the current collector, and the structure is "current collector - active material layer - aqueous safety coating."

Internal short circuits in lithium-ion batteries can generally be categorized into several types: 1) short circuits between the cathode current collector and anode current collector; 2) short circuits between the cathode active material and anode active material; 3) short circuits between the anode active material and the cathode current collector; 4) short circuits between the cathode active material and the anode current collector. Among these, the short circuit point between the anode active material and the cathode current collector has low impedance, and the triggering temperature for the exothermic reaction of the anode is also low, making the short circuit between the anode active material and the aluminum (Al) foil the most dangerous. The present disclosure introduces the binder as a raw material for the aqueous safety coating into the electrode sheet. By introducing the aqueous safety coating having a high adhesion on the surface of the cathode current collector, its excellent adhesion performance allows the aqueous safety coating to firmly adhere to the surface of the current collector of the electrode sheet, which not only decreases surface contact resistance but also reduces the generation of burrs on the cathode current collector during safety testing of the battery cell. This reduces the risk of short circuit between the burrs on the cathode current collector and the unstable anode active materials in a charged state, thereby effectively enhancing the safety of the battery cell.

In some embodiments of the present disclosure, the thickness of the aqueous safety coating ranges from 1 µm to 20 µm, for example, 1 µm to 7 µm, 7 µm to 14 µm, or 14 µm to 20 µm.

In some embodiments of the present disclosure, the coating surface density of the aqueous safety coating ranges from 2 mg/1540.25 mm² to 35 mg/1540.25 mm², for example, 2 mg/1540.25 mm² to 8 mg/1540.25 mm², 8 mg/1540.25 mm² to 15 mg/1540.25 mm², 14 mg/1540.25 mm² to 21 mg/1540.25 mm², 20 mg/1540.25 mm² to 28 mg/1540.25 mm², or 28 mg/1540.25 mm² to 35 mg/1540.25 mm².

There is a positive correlation between the coating surface density and the thickness of the aqueous safety coating. If the thickness is too low, the safety performance of the battery cell will be poor. If the thickness is too great, it will reduce the energy density of the battery cell.

In some embodiments of the present disclosure, the film resistance of the aqueous safety coating under a test pressure of 0.4 t ranges from 0.5 Ω to 5 Ω, for example, 0.5 Ω to 2 Ω, 2 Ω to 3.5 Ω, or 3.5 Ω to 5 Ω. The film resistance of the aqueous safety coating is the primary factor affecting the safety performance of the battery cell. If this value is too low, it will deteriorate the safety performance of the battery cell. If this value is too high, it will deteriorate the cycling performance of the battery cell. A value between 0.5 Ω and 5 Ω at 0.4 t can balance the safety performance and cycling performance.

In some embodiments of the present disclosure, the adhesion of the aqueous safety coating to the current collector is not less than 100 N/m. If the adhesion is below 100 N/m, the aqueous safety coating is at risk of detachment during subsequent use.

In some embodiments of the present disclosure, raw materials of the active material layer include an active material, a second conductive agent, and a second binder.

In some embodiments of the present disclosure, the active material accounts for 90% to 98% by mass of the active material layer.

In some embodiments of the present disclosure, the second conductive agent accounts for 0.5% to 5%, preferably 0.5% to 2% by mass of the active material layer. If the content of the second conductive agent is too low, the cycling performance of the battery cell will be poor. If the content is too high, it will benefit cycling performance but may lead to poor safety performance of the battery cell.

In some embodiments of the present disclosure, the second conductive agent includes at least one selected from the group consisting of acetylene black, graphene, graphyne, carbon nanotubes, carbon fibers, and conductive carbon black. There are no special requirements for the second conductive agent in present disclosure, and conventional conductive agents in the art, such as conductive carbon black or carbon nanotubes, more specifically, Timcal Conductive Carbon Black, namely SUPER P Li can be used.

In some embodiments of the present disclosure, the second binder accounts for 0.5% to 5% by mass of the active material layer. If the amount of the second binder is too low, the adhesion of the active material layer will be insufficient, prone to detachment during subsequent use. If the amount is too high, it may cause difficulties in processing the aqueous safety coating and also deteriorate the internal resistance of the battery cell.

In some embodiments of the present disclosure, the second binder includes at least one selected from the group consisting of polyvinylidene fluoride (PVDF), sodium carboxymethyl battery cellulose (CMC), styrene-butadiene rubber (SBR) and polyacrylic acid (PAA)-type binders. There are no special requirements for the second binder in present disclosure, and conventional binders in the art can be used.

In a specific embodiment, the active material layer can be a cathode active material layer, whose raw materials include a cathode active material, a second conductive agent, and a second binder.

The cathode active material is not limited and can include one or more common materials such as lithium cobalt oxide, lithium iron phosphate, and ternary materials, with an amount of 90 wt% to 98 wt% of the total weight of the active material layer. To ensure that the active material has a certain conductivity and adhesion, a higher content of active material is preferable to achieve a higher energy density for the battery cell.

The second binder is not limited and can include common cathode binders such as polyvinylidene fluoride (PVDF), sodium carboxymethyl battery cellulose (CMC), and PAA-type binders, with an amount of 0.5 wt% to 5 wt% of the total weight of the active material layer. If the amount of the second binder is too low, the adhesion of the active material layer will be insufficient, which can easily cause detachment during subsequent use. If the amount is too high, it may cause difficulties in processing the active material layer and also deteriorate the internal resistance of the battery cell. Considering that the second binder does not directly contact the current collector, the upper limit of its amount can be appropriately reduced to ensure that the cathode active material does not peel off during the use of the battery cell. Meanwhile, a lower amount can also improve the cycling performance of the battery cell, increase the amount of cathode active material and enhance the energy density of the battery cell.

In a specific embodiment, the active material layer can be an anode active material layer, whose raw materials include an anode active material, a second conductive agent, and a second binder.

The anode active material is not limited and can include one or more common materials such as artificial graphite, natural graphite, modified graphite, and silicon-based anode materials such as silicon oxide or silicon-carbon composites, with an amount of 90 wt% to 98 wt% of the total weight of the active material layer.

In some embodiments of the present disclosure, the electrode sheet further includes a current collector. The current collector is not limited and can include common current collectors. For example, when the electrode sheet is a cathode sheet, the current collector can be an aluminum foil or a composite aluminum foil. When the electrode sheet is an anode sheet, the current collector can be a copper foil or a composite copper foil.

In some preferred embodiments of the present disclosure, the current collector has a dyne value of ≥ 30 dyn/cm, preferably ≥38 dyn/cm.

In some embodiments of the present disclosure, the aqueous safety coating is applied on both side surfaces of the current collector, and the aqueous safety coating comprises at least one of the following:
B1) a double-sided thickness of the aqueous safety coating ranges from 1 µm to 20 µm;
B2) a double-sided coating surface density of the aqueous safety coating ranges from 2 mg/1540.25mm² to 35 mg/1540.25mm²;
B3) a double-sided film resistance of the aqueous safety coating tested under a pressure of 0.4 t ranges from 0.5 Ω to 5 Ω;
B4) a double-sided thickness d of the aqueous safety coating and the double-sided film resistance R under a pressure of 0.4 t qualifies a condition of 2 ≤ R × d ≤ 50;
B5) the aqueous safety coating is applied on both side surfaces of the current collector, and along a direction perpendicular to the unwinding direction of the current collector, a distance W_{A1} between the left edge of the aqueous safety coating on surface A of the current collector and the left edge of the current collector ranges from 2 mm to 30 mm, and a distance W_{A2} between the right edge of the aqueous safety coating on surface A of the current collector and the right edge of the current collector ranges from 2 mm to 30 mm; a distance W_{B1} between the left edge of the aqueous safety coating on surface B of the current collector and the left edge of the current collector ranges from 3 mm to 30 mm, and a distance W_{B2} between the right edge of the aqueous safety coating on surface B and the right edge of the current collector ranges from 3 mm to 30 mm; and W_{B1} - W_{A1} ≥ 1 mm, W_{B2} - W_{A2} ≥ 1mm.

In some embodiments of the present disclosure, the double-sided thickness d of the aqueous safety coating (i.e., the sum of the thicknesses of the aqueous safety coating applied on both sides of the current collector) ranges from 1 µm to 20 µm, for example, 1 µm to 7 µm, 7 µm to 14 µm, or 14 µm to 20 µm.

In some embodiments of the present disclosure, the double-sided coating surface density of the aqueous safety coating (i.e., the sum of the coating surface densities of the aqueous safety coating applied on both sides of the current collector) ranges from 2 35 mg/1540.25 mm² to 35 mg/1540.25 mm², for example, 2 mg/1540.25 mm² to 8 mg/1540.25 mm², 8 mg/1540.25 mm² to 15 mg/1540.25 mm², 14 mg/1540.25 mm² to 21 mg/1540.25 mm², 20 mg/1540.25 mm² to 28 mg/1540.25 mm², or 28 mg/1540.25 mm² to 35 mg/1540.25 mm².

There is a positive correlation between the coating surface density and the thickness of the aqueous safety coating. If the thickness is too low, the safety performance of the battery cell will be poor. If the thickness is too great, it will reduce the energy density of the battery cell.

In some embodiments of the present disclosure, the double-sided film resistance R of the aqueous safety coating under a pressure of 0.4 t (i.e., the sum of the film resistances of the aqueous safety coating applied on both sides of the current collector) ranges from 0.5 Ω to 5 Ω, for example, 0.5 Ω to 2 Ω, 2 Ω to 3.5 Ω, or 3.5 Ω to 5 Ω. The film resistance of the aqueous safety coating is the primary factor affecting the safety performance of the battery cell. If this value is too low, it will deteriorate the safety performance of the battery cell. If this value is too high, it will deteriorate the cycling performance of the battery cell. A value between 0.5 Ω and 5 Ω at 0.4 t can balance the safety performance and cycling performance.

In some embodiments of the present disclosure, the double-sided thickness d of the aqueous safety coating (in µm) and the total film resistance R (in Ω) satisfy the condition of 2 ≤ R × d ≤ 50. Generally, both parameters R and d are positively correlated with the safety of the battery cell and negatively correlated with the cycling performance of the battery cell. When the relationship satisfies 2 ≤ R x d ≤ 50, a good balance can be achieved between the safety performance and electrochemical performance of the battery cell.

In some embodiments of the present disclosure, the adhesion of the aqueous safety coating to the current collector is not less than 100 N/m. If the adhesion is below 100 N/m, the aqueous safety coating is at risk of peeling off during subsequent use.

In a specific embodiment, the present disclosure provides a cathode sheet comprising a cathode active material layer, an aqueous safety coating, and a cathode current collector. The aqueous safety coating contains the above aqueous binder, whose structural formula is

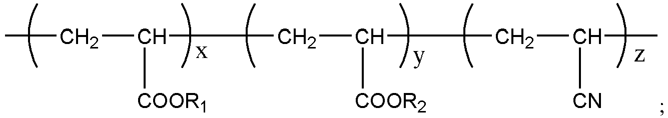

R₁ is independently selected from the group consisting of H, Li, and Na each time it appears; R₂ is independently selected from a substituted or unsubstituted C₁-C₁₀ alkyl each time it appears; and 5 ≤ (x + z) / y ≤ 20, 1.2 ≤ z / x ≤ 2, where x, y, and z are all not equal to 0.

An electrolyte uptake rate of the polyacrylate-based binder at 80°C ranges from 10% to 50%.

The aqueous safety coating is applied on both side surfaces of the current collector.

A double-sided thickness d of the aqueous safety coating ranges from 1 µm to 20 µm.

A double-sided film resistance R of the aqueous safety coating under a pressure of 0.4 t ranges from 0.5 to 5 Ω.

The double-sided thickness d (in µm) of the aqueous safety coating and the total film resistance R (in Ω) satisfy a condition of 2 ≤ R × d ≤ 50.

The present disclosure overcomes the problems of poor low-temperature discharge performance and rate discharge performance of conventional aqueous coatings by limiting the relationships between the various groups contained in the side chains of the binder and selecting the electrolyte uptake rate c (10% ≤ c ≤ 50%). In addition, the aqueous safety coating retains the advantages of conventional aqueous safety coatings, allowing it to firmly adhere to the surface of the current collector, which not only decreases surface contact resistance but also reduces the generation of burrs on the cathode current collector during safety testing of the battery cell. This reduces the risk of contact short circuits between the burrs on the cathode current collector and the unstable anode active material in a charged state, thereby enhancing the safety of the battery cell. Furthermore, limits on the double-sided film resistance and thickness of the coated aqueous safety coating have been established to achieve a balance between the safety performance and cycling performance of the battery cell.

The fourth aspect of the present disclosure proposes a method for preparing the electrode sheet described above, comprising the steps of:
S100: mixing the polyacrylate-based binder with water for mixing to obtain a glue solution;
S200: uniformly mixing the first conductive agent and the inorganic filler with the glue solution, or uniformly mixing the first conductive agent, the thermally stable active material, and the inorganic filler with the glue solution to obtain an aqueous safety coating slurry;
S300: applying the aqueous safety coating slurry onto one or both side surfaces of the current collector, or onto a side surface of the active material layer that is away from the current collector, to obtain the electrode sheet.

The method for preparing the electrode sheet according to the embodiment of the present disclosure has at least the following beneficial effects: by introducing an aqueous safety coating into the electrode sheet and specifying various parameters for the binder and coating, it can balance the safety performance and cycling performance of the battery cell without changing the original process, thereby improving low-temperature discharge performance and rate discharge performance. This method is not only simple in process but also has mild reaction conditions. It is compatible with the existing preparation process and possesses the potential for large-scale application.

In some embodiments of the present disclosure, the preparation method comprises at least one of the following:
C1) a mass ratio of the first conductive agent to the polyacrylate-based binder to the inorganic filler is (0.5 to 5): (1 to 24): (71 to 98.5);
C2) a solid content of the glue solution ranges from 10% to 30%;
C3) a viscosity of the glue solution ranges from 1×10³ mPa·s to 3×10⁴ mPa·s;
C4) a solid content of the aqueous safety coating slurry is ≥ 10%;
C5) a viscosity of the aqueous safety coating slurry is ≥ 50 mPa·s;
C6) a dyne value of the current collector is ≥ 30 dyn/cm;
C7) the aqueous safety coating slurry is applied onto one or both side surfaces of the current collector, or onto a side surface of the active material layer that is away from the current collector, by means of gravure printing;
C8) when comprising C7), a temperature of the oven during gravure printing ranges from 90 °C to 110 °C, and a printing speed ranges from 10 m/min to 50 m/min;
C9) a mass ratio of the first conductive agent to the polyacrylate-based binder to the inorganic filler to the thermally stable active material is (0.5 to 5): (1 to 24): (1 to 97.5): (1 to 97.5).

In some embodiments of the present disclosure, the mass ratio of the first conductive agent to the polyacrylic acid binder to the inorganic filler is (0.5 to 5): (1 to 24): (71 to 98.5). For example, in terms of weight parts, the first conductive agent is 0.5 to 5 parts, the binder is 1 to 24 parts, and the inorganic filler is 71 to 98.5 parts.

In some embodiments of the present disclosure, the solid content of the glue solution ranges from 10% to 30%, for example, 10% to 20%, 20% to 25%, or 25% to 30%.

In some embodiments of the present disclosure, the viscosity of the glue solution ranges from 1×10³ mPa·s to 3×10⁴ mPa·s, preferably 1.5×10⁴ mPa·s to 2.5×10⁴ mPa·s, and more preferably 1.6×10⁴ mPa·s to 2.2×10⁴ mPa·s, for example, 2×10⁴ mPa·s.

If the solid content and viscosity of the glue solution glued by the binder are too low, it will not only reduce processing efficiency but may also lead to insufficient adhesion of the aqueous safety coating. If the solid content and viscosity are too high, it may cause difficulties in processing the aqueous safety coating.

In some embodiments of the present disclosure, raw materials of the aqueous safety coating further include a thermally stable active material, with a mass ratio of the first conductive agent: the binder: the inorganic filler: the thermally stable active material = (0.5 to 5): (1 to 24): (1 to 97.5): (1 to 97.5). For example, in terms of weight parts, the first conductive agent is 0.5 to 5 parts, the binder is 1 to 24 parts, the inorganic filler is 1 to 97.5 parts, and the thermally stable active material is 1 to 97.5 parts.

In some embodiments of the present disclosure, the solid content of the aqueous safety coating slurry is ≥ 10%, preferably 10% to 21%.

In some embodiments of the present disclosure, the viscosity of the aqueous safety coating slurry is ≥ 50 mPa·s.

The solid content of the aqueous safety coating slurry should not be lower than 10%, and the viscosity should not be lower than 50 mPa·s. A solid content that is too low will not only reduce production efficiency but also make it difficult to obtain the specified thickness and surface density of the aqueous safety coating. In addition, a viscosity that is too low will hinder the gravure printing process.

In some embodiments of the present disclosure, the dyne value of the current collector is ≥ 30 dyn/cm, preferably ≥ 38 dyn/cm. When the dyne value of the current collector is below 30 dyn/cm, on one hand, it is not conducive to the wetting of the current collector by the aqueous safety coating slurry, leading to incomplete coating at the primer; on the other hand, it reduces the adhesion between the aqueous safety coating and the current collector, making the aqueous safety coating more prone to peeling off during subsequent use, thereby adversely affecting the safety of the battery cell. A dyne value of not less than 38 dyn/cm ensures that the coating exhibits a good appearance and that the adhesion between the aqueous safety coating and the current collector is strong.

In some embodiments of the present disclosure, the aqueous safety coating slurry is applied onto one or both side surfaces of the current collector, or onto the side surface of the active material layer that is away from the current collector.

In some embodiments of the present disclosure, during gravure printing, a temperature of the oven ranges from 90 °C to 110 °C. A printing speed is not less than 10 m/min, preferably 10 to 50 m/min.

The temperature of the oven can be 90°C to 110°C, and the printing speed can be 10 to 50 m/min during gravure printing. If the temperature of oven is below 90°C, it will reduce production efficiency. If the temperature of oven is above 110 °C, issues such as cracking and migration of the conductive agent to the surface may occur. A printing speed that is too low will also reduce production efficiency, while a speed that is too high may lead to incomplete coating of the aqueous safety coating, negatively affecting the safety performance of the battery cell.

In a specific embodiment of the present disclosure, a method for preparing the electrode sheet described above is provided, and the method comprises the following steps:
(1) using deionized water as a solvent, adding a binder for mixing to obtain a glue solution with suitable viscosity and solid content, and then uniformly mixing a first conductive agent and an inorganic filler into the glue solution to obtain an aqueous safety coating slurry;
(2) transferring the aqueous safety coating slurry obtained in step (1) by gravure printing to one or both side surfaces of the current collector, or to a side surface of the active material layer that is away from the current collector to obtain an electrode sheet with alternately arranged aqueous safety coating areas and non-aqueous safety coating areas along the direction of unwinding direction of the electrode sheet.

In some embodiments of the present disclosure, a total length of the electrode sheet containing the aqueous safety coating is L, a length of the aqueous safety coating area is L₁, and a length of the non-aqueous safety coating area is L₂, where L₁ > L₂, and L₁ + L₂ = L.

In some embodiments of the present disclosure, both sides of the electrode sheet (surface A and surface B) can be applied with aqueous safety coating, where a length of the aqueous safety coating area on surface A is L_{A1}, a length of the non-aqueous safety coating area is L_{A2}, and L_{A1} > L_{A2}, L_{A1} + L_{A2} = L_{A}; a length of the aqueous safety coating area on surface B is L_{B1}, and a length of the non-aqueous safety coating area is L_{B2}, where L_{B1} > L_{B2}, L_{B1} + L_{B2} = L_{B}.

In some preferred embodiments of the present disclosure, to improve production efficiency and reduce costs, L_{A2} and L_{B2} can both be 0, i.e., L_{A1} = L_{B1} = L_{A} = L_{B}.

In some embodiments of the present disclosure, during the application of the aqueous safety coating, it is also necessary to reserve N₁ slots for tab welding in the aqueous safety coating area or the non-aqueous safety coating area along the unwinding direction of the electrode sheet, where N₁ ≥ 0.

In some embodiments of the present disclosure, during the application of the aqueous safety coating, it is also necessary to reserve N₂ slots for tab welding in the aqueous safety coating area or the non-aqueous safety coating area along the direction perpendicular to the unwinding direction of the electrode sheet, where N₂ ≥ 0.

In some embodiments of the present disclosure, during the application of the aqueous safety coating, it is also possible to simultaneously apply N₃ strips of aqueous safety coating along the unwinding direction of the electrode sheet, where N₃ ≥ 1.

In some embodiments of the present disclosure, if both sides of the electrode sheet are coated with safety coating, when reserving the slots for tab welding, the slots on surface A and surface B need to be oppositely positioned, with both the lateral and longitudinal offset distance (ΔW) not exceeding 2 mm.

In some embodiments of the present disclosure, if both sides of the electrode sheet are applied with safety coating, then, along the direction perpendicular to the unwinding direction of the current collector, the distance between the left edge of the aqueous safety coating on surface A and the left edge of the current collector is W_{A1} (i.e., the left blank on surface A is W_{A1}), the right blank on surface A is W_{A2}, the left blank on surface B is W_{B1}, and the right blank on surface B is W_{B2}, satisfying 2 mm ≤ W_{A1}, W_{A2}, W_{B1}, W_{B2} ≤ 30 mm, and W_{B1} - W_{A1} ≥ 1 mm, W_{B2} - W_{A2} ≥ 1 mm.

In some embodiments of the present disclosure, the electrode sheet is a cathode sheet, and the method for preparing the cathode sheet includes the following steps:
(10) using deionized water as a solvent, adding the binder to for mixing to obtain a glue solution with suitable viscosity and solid content, and then uniformly mixing a first conductive agent, an inorganic filler into the slurry, or uniformly mixing a first conductive agent and an inorganic filler into the glue solution to obtain an aqueous safety coating slurry;
(20) transferring the aqueous safety coating slurry obtained in step (1) by gravure printing to one or both side surfaces of the current collector to obtain a cathode sheet with alternately arranged aqueous safety coating areas and non-aqueous safety coating areas along the direction of unwinding direction of the electrode sheet.

The non-aqueous safety coating area corresponds to the head and/or tail of the cathode sheet. Usually one surface is the active material, and the other surface is a bare foil or a separately provided ceramic layer. The ceramic layer generally contains only an inorganic filler and a binder, which can reduce the generation of burrs on the cathode current collector in the non-aqueous safety coating area during battery cell testing and reduce the probability of contact between the cathode current collector and anode active material, thereby improving battery cell safety. However, the ceramic layer requires an additional applying step after the safety coating is applied, which not only reduces production efficiency but also increases production costs.

In some embodiments of the present disclosure, a total length of the cathode sheet containing the aqueous safety coating is L, a length of the aqueous safety coating area is L₁, and a length of the non-aqueous safety coating area is L₂, where L₁ > L₂, and L₁ + L₂ = L.

In some embodiments of the present disclosure, both sides of the cathode sheet (surface A and surface B) can be applied with aqueous safety coating, where a length of the aqueous safety coating area on surface A is L_{A1}, a length of the non-aqueous safety coating area is L_{A2}, and L_{A1} > L_{A2}, L_{A1} + L_{A2} = L_{A}; a length of the aqueous safety coating area on surface B is L_{B1}, and a length of the non-aqueous safety coating area is L_{B2}, where L_{B1} > L_{B2}, L_{B1} + L_{B2} = L_{B}.

In some preferred embodiments of the present disclosure, to improve production efficiency and reduce costs, the function of the ceramic layer can be undertaken by the aqueous safety coating, i.e., the non-aqueous safety coating area is also applied with aqueous safety coating, with L_{A2} and L_{B2} both being 0, i.e., L_{A1} = L_{B1} = L_{A} = L_{B}.

Fig. 2 illustrates a cross-sectional view of the current collector coated with aqueous safety coating along the unwinding direction in one specific embodiment of the present disclosure. In Fig. 2, 02 indicates the cathode current collector containing a safety coating; 021 indicates reserved slots; 022 indicates the current collector; 023 indicates the aqueous safety coating; and 024 indicates the non-safety coating area. Among these, the aqueous safety coating area and non-aqueous safety coating area on surface A and surface B of the cathode sheet can be oppositely arranged as shown in Fig. 2(a). Alternatively, one surface can have a non-aqueous safety coating area while the other surface has an aqueous safety coating area as shown in Fig. 2(b), where the total length of the current collector containing an aqueous safety coating is L, the length of the aqueous safety coating area on surface B is L_{B1}, and the length of the non-aqueous safety coating area is L_{B2}, with L_{B1} > L_{B2}, L_{B1} + L_{B2} = L_{B} = L_{A1} = L_{A} = L. It is also possible to set the non-aqueous safety coating area as an aqueous safety coating, with L_{A2} and L_{B2} both being 0, i.e., L_{A1} = L_{B1} = L_{A} = L_{B}, as shown in Fig. 2(c).

In some embodiments of the present disclosure, during the application of the aqueous safety coating, it is also necessary to reserve N₁ slots for tab welding in the aqueous safety coating area or the non-aqueous safety coating area along the unwinding direction of the current collector, where N₁ ≥ 0.

In some embodiments of the present disclosure, during the application of the aqueous safety coating, it is also necessary to reserve N₂ slots for tab welding in the aqueous safety coating area or the non-aqueous safety coating area along the direction perpendicular to the unwinding direction of the current collector, where N₂ ≥ 0.

In some embodiments of the present disclosure, during the application of the aqueous safety coating, it is also possible to simultaneously apply N₃ strips of aqueous safety coating along the unwinding direction of the current collector, where N₃ ≥ 1.

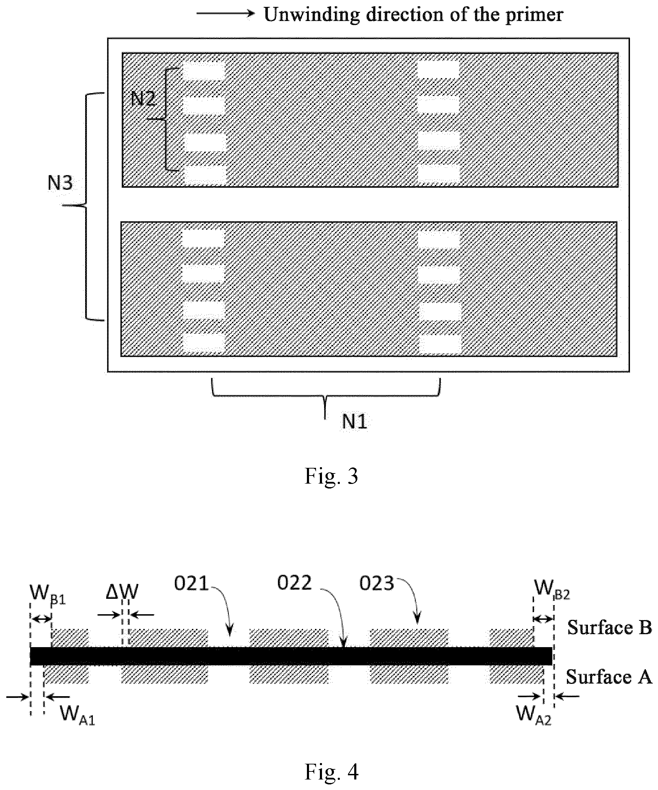

The present disclosure allows for the reservation or non-reservation of slots for tab welding as needed during the application of the aqueous safety coating, as shown in Fig. 3.

In some embodiments of the present disclosure, if both sides of the current collector are applied with safety coating, when reserving the slots for tab welding, the slots on surface A and surface B need to be oppositely positioned, with both the lateral and longitudinal offset distance (ΔW) not exceeding 2 mm.

In some embodiments of the present disclosure, both side surfaces of the current collector are applied with the aqueous safety coating. Along the direction perpendicular to the unwinding direction of the current collector, the distance W_{A1} between the left edge of the aqueous safety coating on surface A and the left edge of the current collector ranges from 2 mm to 30 mm, and the distance W_{A2} between the right edge of the aqueous safety coating on surface A to the right edge of the current collector ranges from 2 mm to 30 mm; the distance W_{B1} between the left edge of the aqueous safety coating on surface B and the left edge of the current collector ranges from 3 mm to 30 mm, and the distance W_{B2} between the right edge of the aqueous safety coating on surface B and the right edge of the current collector ranges from 3 mm to 30 mm. In other words, if both sides of the electrode sheet are applied with safety coating, then, along the direction perpendicular to the unwinding direction of the current collector, the distance between the left edge of the aqueous safety coating on surface A and the left edge of the current collector is W_{A1} (i.e., the left blank on surface A is W_{A1}), the right blank on surface A is W_{A2}, the left blank on surface B is W_{B1}, and the right blank on surface B is W_{B2}, satisfying 2 mm ≤ W_{A1}, W_{A2} ≤ 30 mm, 3 mm ≤ W_{B1}, W_{B2} ≤ 30 mm, and W_{B1} - W_{A1} ≥ 1 mm, W_{B2} - W_{A2} ≥ 1 mm. Fig. 4 illustrates a cross-sectional view of the aqueous safety coating perpendicular to the unwinding direction in one specific embodiment of the present disclosure. In Fig. 4, 021 indicates reserved slots; 022 indicates the current collector; and 023 indicates the aqueous safety coating. This arrangement ensures that the width of the aqueous safety coating on surface A is more than 2 mm wider than that on surface B, thereby reducing edge bulging during the winding of the primer.

The fifth aspect of the present disclosure proposes a lithium-ion battery comprising a cathode sheet, an anode sheet, and a separator spaced between the cathode sheet and the anode sheet; and the cathode sheet and/or the anode sheet is the electrode sheet described above or prepared by the method described above.

Since the lithium-ion battery employs all the technical solutions of the electrode sheets in the above embodiments, it possesses at least all the beneficial effects brought about by the technical solutions of the above embodiments. That is, the lithium-ion battery achieves good safety performance and cycling performance by introducing an aqueous safety coating into the electrode sheets and limiting relevant parameters such as the molecular weight and the contents of cyano, ester, and carboxylate groups in the molecular chain of the binder, while also enhancing high and low-temperature discharge performance and cycling performance. This not only improves the safety performance and cycling performance of the battery but also significantly enhances the high and low-temperature discharge performance and rate discharge performance of the battery.

In some embodiments of the present disclosure, the cathode sheet is the electrode sheet described above. This cathode sheet includes the above cathode current collector containing an aqueous safety coating and a cathode active material layer applied on at least one surface of the cathode current collector. The cathode current collector is a cathode current collector commonly used in the art, such as, but is not limited to, an aluminum foil. The cathode active material layer includes a cathode active material commonly used in current lithium-ion batteries, including but is not limited to, one or more compounds represented by the chemical formula such as LiₓNiₕCo_{y}M_{z}O_{2-d}N_{d} (where 0.95 ≤ x ≤ 1.2, h > 0, y ≥ 0, z ≥ 0, and h + y + z = 1, 0 ≤ d ≤ 1; M is one or more selected from the group consisting of Mn and Al; and N is one or more selected from the group consisting of F, P, and S). The cathode active material can also include but is not limited to, one or more selected from the group consisting of LiCoO₂, LiNiO₂, LiVO₂, LiCrO₂, LiMn₂O₄, LiCoMnO₄, Li₂NiMn₃O₈, LiNi_{0.5}Mn_{1.5}O₄, LiCoPO₄, LiMnPO₄, LiFePO₄, LiNiPO₄, LiCoFSO₄, CuS₂, FeS₂, MoS₂, NiS, and TiS₂, etc. The cathode active material may also undergo modification treatment. Methods for modifying the cathode active material are known to those skilled in the art, for example, modifying the cathode active material by a coating or doping method. The materials used for modification can include but are not limited to, one or more selected from the group consisting of Al, B, P, Zr, Si, Ti, Ge, Sn, Mg, Ce, and W, etc.

In some embodiments of the present disclosure, the anode sheet is the electrode sheet described above. This anode sheet includes an anode current collector and an anode active material layer applied on at least one surface of the anode current collector. There are no special requirements for the anode current collector, which can be a commonly used copper foil in the industry. The anode active material layer includes an anode active material including a silicon-based material, which is one or more selected from the group consisting of elemental silicon, silicon oxides, silicon-carbon composites, and silicon alloys, and a mixture of a silicon anode material with other anode active materials commonly used. The other anode active materials include but are not limited to, one or more selected from the group consisting of graphite, soft carbon, hard carbon, carbon fibers, intermediate phase carbon microspheres, tin-based materials, lithium titanate, and other metals that can form alloys with lithium, etc. Among these, the graphite can be one or more selected from the group consisting of artificial graphite, natural graphite and modified graphite; the tin-based material can be one or more selected from the group consisting of elemental tin, tin oxides, and tin alloys.

In some embodiments of the present disclosure, the separator can be made from various materials suitable for lithium-ion battery separators in the art, for example, including but are not limited to, one or more selected from the group consisting of polyethylene, polypropylene, polyvinylidene fluoride, aramid, polyethylene terephthalate, polytetrafluoroethylene, polyacrylonitrile, polyimide, polyamide, polyester, and natural fibers, etc. In actual production, there are no strict limitations on the material and structure of the separator; for example, it can be a multi-layer structure formed by laminating the above materials or a single-layer structure formed by mixing the above materials, or single-layer structure formed by a single material, as long as it can perform the basic function of a separator.

In some embodiments of the present disclosure, the lithium battery further includes an electrolyte that soaks the cathode, anode, and separator. The electrolyte includes an organic solvent, a lithium salt as the electrolyte, and an additive. Among them, the lithium salt as the electrolyte can be LiPF₆ and/or LiBOB used in high-temperature electrolytes; or at least one selected from the group consisting of LiBF₄, LiBOB, and LiPF₆ used in low-temperature electrolytes; or at least one selected from the group consisting of LiBF₄, LiBOB, LiPF₆, and LiTFSI used in overcharge prevention electrolytes; or at least one selected from the group consisting of LiClO₄, LiAsF₆, LiCF₃SO₃, and LiN(CF₃SO₂)₂. The organic solvent can be cyclic carbonates, including propylene carbonate (PC), ethylene carbonate (EC); or linear carbonates, including diethyl carbonate (DEC), dimethyl carbonate (DMC), or ethyl methyl carbonate (EMC); or carboxylate esters, including propyl propionate (PP), methyl acetate (MA), ethyl acetate (EA), ethyl propanoate (EP), etc. The additive includes but is not limited to, at least one selected from the group consisting of a film-forming agent, a conductive additive, a flame retardant, an overcharge prevention additive, an additive controlling the content of H₂O and HF in the electrolyte, an additive improving low-temperature performance, and an aqueous safety additive.

The present disclosure further proposes a secondary battery comprising a cathode sheet, an anode sheet, and a separator spaced between the cathode sheet and anode sheet; the cathode sheet and/or the anode sheet are the electrode sheet described above or prepared by the method described above. The electrode sheet proposed in the present disclosure can be applied not only to the above lithium-ion batteries but also to other secondary batteries, including sodium-ion batteries, potassium-ion batteries, etc., without any limitation herein.

The sixth aspect of the present disclosure provides use of the above lithium-ion battery in an energy storage device, a power device, or an electronic device.

### BRIEF DESCRIPTION OF DRAWINGS

The present disclosure will be further described with reference to the attached drawings and examples hereinafter, in which:
Fig. 1 is a schematic structural diagram of a cathode sheet containing an aqueous safety coating provided by the present disclosure, wherein 01 indicates the cathode sheet; 011 indicates the active material layer; 022 indicates the current collector; and 023 indicates the aqueous safety coating;
Fig. 2 is a cross-sectional structural diagram of a current collector containing an aqueous safety coating along the unwinding direction provided by the present disclosure, wherein 02 indicates the cathode current collector containing a safety coating; 021 indicates reserved slots; 022 indicates the current collector; 023 indicates the aqueous safety coating; and 024 indicates the non-safety coating area;
Fig. 3 is a top view of a current collector containing an aqueous safety coating (unstriped state) provided by the present disclosure; and
Fig. 4 is a cross-sectional structural diagram of a current collector containing an aqueous safety coating along the unwinding direction provided by the present disclosure, wherein 021 indicates reserved slots; 022 indicates the current collector; and 023 indicates the aqueous safety coating.

### DETAILED DESCRIPTION OF EMBODIMENTS

The concept and technical effects of the present disclosure will be clearly and completely described as below with reference to the examples, so as to fully understand the purposes, characteristics and effects of the present disclosure. Obviously, the described examples are only a part of, not all of, the examples of the present disclosure. All other examples obtained by a person of ordinary skill in the art based on the examples of the present disclosure without creative effort shall fall into the protection scope of the present disclosure.

In the description of the present disclosure, the reference terms "one embodiment", "some embodiments", "illustrative embodiments", "examples", "specific examples", or "some examples", etc., indicate that the specific features, structures, materials, or characteristics described in conjunction with the embodiments or examples are included in at least one embodiment or example of the present disclosure. In this specification, the illustrative representation of the above terms does not necessarily refer to the same embodiment or example. Moreover, the specific features, structures, materials, or characteristics described is combined in any one or more embodiments or examples in a suitable manner.

In the description of the present disclosure, unless otherwise specified, the numerical range "a to b" is a shorthand representation indicating any combination of real numbers between a and b, where a and b are real numbers. Unless otherwise specified, each reaction or operation step is carried out in sequence or not in sequence. Preferably, the reaction methods in the present disclosure are carried out in sequence.

In the following examples, where specific technologies or conditions are not indicated, they are conducted according to the technologies or conditions described in the literature within the art or according to product instructions. All reagents or instruments not specifying a manufacturer are conventional products available through commercial purchase.

### Example 1

This example provided a lithium-ion battery, wherein the cathode sheet contained an aqueous safety coating including a binder, a first conductive agent of Super P Li, and an inorganic filler of boehmite, wherein the structural formula of the binder was as follows: 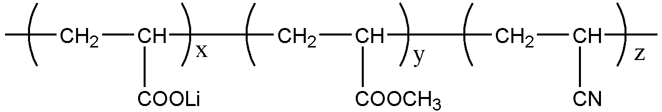
(1) Preparation of the binder:
   a) In a reaction vessel, 1,000 parts by weight of distilled water was added, stirring was initiated, and high-purity nitrogen gas was introduced to deoxygenate for 1 hour, then 50 parts by weight of acrylonitrile, 35 parts by weight of lithium acrylate, and 15 parts by weight of methyl acrylate were added. The resulting mixture was heated to 65°C under an inert atmosphere and maintained at the constant temperature;
   b) then 5 parts by weight of a 20% ammonium persulfate solution as an initiator was added to initiate the reaction, wherein the reaction lasted for 5 hours;
   c) after the reaction ended, the resulting mixture was subjected to filtering, drying, crushing, and sieving to obtain the binder. In the binder, the content of -CN was n₁ = 50%, the content of -COOLi was n₂ = 35%, the content of -COOCH₃ was n₃ = 15%, the weight-average molecular weight M_{w} was 3.5×10⁵, the number-average molecular weight M_{w} was 1.8×10⁵, M_{w} / Mₙ = 1.94, and the electrolyte uptake rate c = 23%.
(2) Preparation of the cathode current collector containing an aqueous safety coating:
   Deionized water was used as a solvent; 10 parts of the binder was added for mixing. The amount of deionized water was adjusted until a glue solution with a solid content of 15% and a viscosity of 2.0×10⁴ mPa·s was obtained. Then 88 parts of the inorganic filler of boehmite (a median particle size Dᵥ₅₀ was 0.4 µm, and a specific surface area was 9.5 m²/g) and 2 parts of the first conductive agent of Super P Li were added into the glue solution for uniformly mixing to obtain an aqueous safety coating slurry with a solid content of 20% and a viscosity of 750 mPa·s. The aqueous safety coating slurry was applied on both side surfaces of an aluminum foil by gravure printing, where L_{A2} and L_{B2} were both 0, i.e., L_{A1} = L_{B1} = L_{A} = L_{B} = L, N₁ = N₃ = 1, and N₂ = 4. Additionally, the temperature of the oven was set to 95°C, and the printing speed was 30 m/min during printing to ultimately obtain a cathode current collector with a double-sided primer of aqueous safety coating. The aqueous safety coating had a double-sided coating surface density of 10 mg/1540.25 mm², a double-sided thickness of 5.1 µm, a double-sided film resistance of 2.8 Ω @ 0.4T. The adhesion of the aqueous safety coating to the current collector was 1318 N/m.
(3) Preparation of the cathode sheet:
   A cathode active material, a conductive agent (a mixture of conductive carbon black and carbon nanotubes in a mass ratio of 6:5), PVDF binder, and NMP were mixed in a mass ratio of 97.6: 1.1: 1.3: 35 to obtain a cathode slurry with a solid content of 75% and a viscosity of 7,000 mPa·s. The cathode slurry was applied on one side of the aluminum foil current collector containing the aqueous safety coating, dried at 85°C for winding. Then the cathode slurry was applied and dried on the other side of the aluminum foil current collector containing the aqueous safety coating using the same method. Subsequently, the cathode sheet applied on both sides with the cathode active material layer was subjected to cold pressing, followed by edge trimming and strip cutting to obtain the lithium-ion battery cathode sheet.
(4) Preparation of the anode sheet:
   Water was used as a solvent; graphite, thickening agent, and SBR binder were mixed in a mass ratio of 97.7:1.1:1.2 to obtain a lithium-ion battery anode slurry with a solid content of 50% and a viscosity of 5,000 mPa·s. The anode slurry was applied on one side surface of a copper foil current collector and dried at 80°C for winding. Then the anode slurry was applied and dried on the other side of the copper foil using the same method to obtain an anode sheet uniformly coated with active material on both sides.
(5) Preparation of the electrolyte:
   Lithium hexafluorophosphate (LiPF₆) was dissolved in a mixed solvent of dimethyl carbonate (DMC), ethylene carbonate (EC), and ethyl methyl carbonate (EMC) (a mass ratio of DMC, EC, and EMC was 3:5:2) to obtain the electrolyte.
(6) Preparation of the battery:
   The prepared cathode sheet, anode sheet, and a separator were wound into a battery cell, with a battery cell capacity of approximately 5 Ah. The separator was positioned between the adjacent cathode sheet and anode sheet. The cathode was connected using an aluminum tab by spot welding, and the anode was connected using a nickel tab by spot welding. Then the battery cell was placed into an aluminum-plastic pouch bag. After baking, the above electrolyte was injected into the battery cell. Finally, the lithium-ion battery was manufactured through processes such as sealing, formation, and capacity grading.

### Example 2

The difference between this example and Example 1 was that the 35 parts by weight of lithium acrylate during the synthesis of the binder were replaced with an equal amount of sodium acrylate, resulting in the structural formula of the binder as follows:

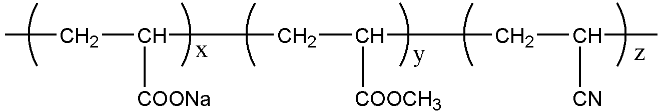

The rest remained the same as Example 1 and would not be repeated here.

### Example 3

The difference between this example and Example 1 was that the 15 parts by weight of methyl acrylate during the synthesis of the binder were replaced with an equal amount of butyl acrylate, resulting in the structural formula of the binder as follows:

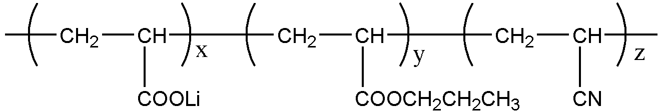

The rest remained the same as Example 1 and would not be repeated here.

### Example 4

The difference between this example and Example 1 was that in the binder, the content of -CN was n₁ = 56.7%, the content of -COOR₁ was n₂ = 28.3%, the content of -COOR₂ was n₃ = 15%. Accordingly, during the synthesis of the binder, the weight parts of acrylonitrile were changed to 56.7 parts, the weight parts of lithium acrylate were changed to 28.3 parts, while the weight parts of methyl acrylate remained at 15 parts.

The rest remained the same as Example 1 and would not be repeated here.

### Example 5

The difference between this example and Example 1 was that in the binder, the content of -CN was n₁ = 46.4%, the content of -COOR₁ was n₂ = 38.6%, the content of -COOR₂ was n₃ = 15%. Accordingly, during the synthesis of the binder, the weight parts of acrylonitrile were changed to 46.4 parts, the weight parts of lithium acrylate were changed to 38.6 parts, while the weight parts of methyl acrylate remained at 15 parts.

The rest remained the same as Example 1 and would not be repeated here.

### Example 6

The difference between this example and Example 1 was that in the binder, the content of -CN was n₁ = 56%, the content of -COOR₁ was n₂ = 39.2%, the content of -COOR₂ was n₃ = 4.8%. Accordingly, during the synthesis of the binder, the weight parts of acrylonitrile were changed to 56 parts, the weight parts of lithium acrylate were changed to 39.2 parts, and the weight parts of methyl acrylate were changed to 4.8 parts.

The rest remained the same as Example 1 and would not be repeated here.

### Example 7

The difference between this example and Example 1 was that in the binder, the content of -CN was n₁ = 49.1%, the content of -COOR₁ was n₂ = 34.3%, the content of -COOR₂ was n₃ = 16.6%. Accordingly, during the synthesis of the binder, the weight parts of acrylonitrile were changed to 49.1 parts, the weight parts of lithium acrylate were changed to 34.3 parts, and the weight parts of methyl acrylate were changed to 16.6 parts.

The rest remained the same as Example 1 and would not be repeated here.

### Example 8

The difference between this example and Example 1 was that in the binder, the content of -CN was n₁ = 55%, the content of -COOR₁ was n₂ = 30%, the content of -COOR₂ was n₃ = 15%. Accordingly, during the synthesis of the binder, the weight parts of acrylonitrile were changed to 55 parts, the weight parts of lithium acrylate were changed to 30 parts, while the weight parts of methyl acrylate remained at 15 parts.

The rest remained the same as Example 1 and would not be repeated here.

### Example 9

The difference between this example and Example 1 was that in the binder, the content of -CN was n₁ = 53%, the content of -COOR₁ was n₂ = 37%, the content of -COOR₂ was n₃ = 10%. Accordingly, during the synthesis of the binder, the weight parts of acrylonitrile were changed to 53 parts, the weight parts of lithium acrylate were changed to 37 parts, and the weight parts of methyl acrylate were changed to 10 parts.

The rest remained the same as Example 1 and would not be repeated here.

### Example 10

The difference between this example and Example 1 was that in the aqueous safety coating, the usage amount of the first conductive agent of Super P Li was 3 parts, the usage amount of the inorganic filler of boehmite was 87 parts, and the usage amount of the binder was 10 parts.

The rest remained the same as Example 1 and would not be repeated here.

### Example 11

The difference between this example and Example 1 was that in the aqueous safety coating, the usage amount of the first conductive agent of Super P Li was 1.5 parts, the usage amount of the inorganic filler of boehmite was 88.5 parts, and the usage amount of the binder was 10 parts.

The rest remained the same as Example 1 and would not be repeated here.

### Example 12

The difference between this example and Example 1 was that in the aqueous safety coating, the usage amount of the first conductive agent of Super P Li was 2 parts, the usage amount of the inorganic filler of boehmite was 83 parts, and the usage amount of the binder was 15 parts.

The rest remained the same as Example 1 and would not be repeated here.

### Example 13

The difference between this example and Example 1 was that during applying, the non-aqueous safety coating area on surface B was separately provided with a ceramic layer, i.e., L_{B2} ≠ 0, as shown in Fig. 2. The total length of the current collector containing the aqueous safety coating was L, the length of the aqueous safety coating area on surface B was L_{B1}, the length of the non-aqueous coating area was L_{B2}, and L_{B1} > L_{B2}, L_{B1} + L_{B2} = L_{B} = L_{A1} = L_{A} = L.

The rest remained the same as Example 1 and would not be repeated here.

### Comparative Example 1

The difference between this comparative example and Example 1 was that in the binder, the content of -CN was n₁ = 60%, the content of -COOR₁ was n₂ = 40%, the content of -COOR₂ was n₃ = 0%, where (n₁ + n₂) / n₃ did not exist. Accordingly, during the synthesis of the binder, the weight parts of acrylonitrile were changed to 60 parts, the weight parts of lithium acrylate were changed to 40 parts, and there was no methyl acrylate.

The rest remained the same as Example 1 and would not be repeated here.

### Comparative Example 2

The difference between this comparative example and Example 1 was that in the binder, the content of -CN was n₁ = 0%, the content of -COOR₁ was n₂ = 70%, the content of -COOR₂ was n₃ = 30%, where n₁ / n₂ = 0. Accordingly, during the synthesis of the binder, the weight parts of lithium acrylate were changed to 70 parts, the weight parts of methyl acrylate were changed to 30 parts, and there was no acrylonitrile.

The rest remained the same as Example 1 and would not be repeated here.

### Comparative Example 3

The difference between this comparative example and Example 1 was that in the binder, the content of -CN was n₁ = 75%, the content of -COOR₁ was n₂ = 0%, the content of -COOR₂ was n₃ = 25%, where n₁ / n₂ did not exist. Accordingly, during the synthesis of the binder, the weight parts of acrylonitrile were changed to 75 parts, the weight parts of methyl acrylate were changed to 25 parts, and there was no lithium acrylate.

### Comparative Example 4

The difference between this comparative example and Example 1 was that in the binder, the content of -CN was n₁ = 42.5%, the content of -COOR₁ was n₂ = 42.5%, the content of -COOR₂ was n₃ = 15%. Accordingly, during the synthesis of the binder, the weight parts of acrylonitrile were changed to 42.5 parts, the weight parts of lithium acrylate were changed to 42.5 parts, while the weight parts of methyl acrylate remained at 15 parts.

The rest remained the same as Example 1 and would not be repeated here.

### Comparative Example 5

The difference between this comparative example and Example 1 was that in the binder, the content of -CN was n₁ = 65%, the content of -COOR₁ was n₂ = 20%, the content of -COOR₂ was n₃ = 15%. Accordingly, during the synthesis of the binder, the weight parts of acrylonitrile were changed to 65 parts, the weight parts of lithium acrylate were changed to 20 parts, while the weight parts of methyl acrylate remained at 15 parts.

The rest remained the same as Example 1 and would not be repeated here.

### Comparative Example 6

The difference between this comparative example and Example 1 was that in the binder, the content of -CN was n₁ = 56.5%, the content of -COOR₁ was n₂ = 39.5%, the content of -COOR₂ was n₃ = 4%. Accordingly, during the synthesis of the binder, the weight parts of acrylonitrile were changed to 56.5 parts, the weight parts of lithium acrylate were changed to 39.5 parts, and the weight parts of methyl acrylate were changed to 4 parts.

The rest remained the same as Example 1 and would not be repeated here.

### Comparative Example 7

The difference between this comparative example and Example 1 was that in the binder, the content of -CN was n₁ = 29.4%, the content of -COOR₁ was n₂ = 20.6%, the content of -COOR₂ was n₃ = 50%. Accordingly, during the synthesis of the binder, the weight parts of acrylonitrile were changed to 29.4 parts, the weight parts of lithium acrylate were changed to 20.6 parts, and the weight parts of methyl acrylate were changed to 50 parts.

The rest remained the same as Example 1 and would not be repeated here.

### Comparative Example 8

The difference between this comparative example and Example 1 was that by adjusting the weight parts of the initiator (20% by mass of ammonium persulfate solution) to 2 parts, the resulting binder had a weight-average molecular weight M_{w} of 5×10⁵, a number-average molecular weight M_{w} of 1×10⁵, and M_{w} / Mₙ = 5.

The rest remained the same as Example 1 and would not be repeated here.

### Comparative Example 9

The difference between this comparative example and Example 1 was that in the aqueous safety coating, the amount of the first conductive agent was increased to 6.0 parts, the amount of boehmite was decreased to 84 parts, and the amount of the binder remained at 10 parts, resulting in a rapid decrease in film resistance to 0.3 Ω @ 0.4 T.

The rest remained the same as Example 1 and would not be repeated here.

### Comparative Example 10

The difference between this comparative example and Example 1 was that in the aqueous safety coating, the amount of the first conductive agent was decreased to 0.2 parts, the amount of boehmite was increased to 89.8 parts, and the amount of the binder remained at 10 parts, resulting in a rapid increase in film resistance to 12.1 Ω @ 0.4 T.

The rest remained the same as Example 1 and would not be repeated here.

### Comparative Example 11

The difference between this comparative example and Example 1 was that the solid content of the prepared aqueous safety coating slurry was increased to 28%, resulting in an increase in the thickness of the aqueous safety coating to 15.9 µm.

The rest remained the same as Example 1 and would not be repeated here.

### Comparative Example 12

The difference between this comparative example and Example 1 was that the amount of the binder was decreased to 0.53 parts, and the amount of boehmite was increased to 97.47 parts.

The rest remained the same as Example 1 and would not be repeated here.

### Comparative Example 13

The difference between this comparative example and Example 1 was that the amount of the binder was increased to 25 parts, and the amount of boehmite was decreased to 73 parts.

The rest remained the same as Example 1 and would not be repeated here.

### Comparative Example 14

The difference between this comparative example and Example 1 was that the binder was replaced with a PVDF binder, and the solvent was changed from deionized water to NMP (N-methyl pyrrolidone).

The rest remained the same as Example 1 and would not be repeated here.

### Comparative Example 15

The difference between this comparative example and Example 1 was that the surface of the cathode current collector was not coated with an aqueous safety coating.

The rest remained the same as Example 1 and would not be repeated here.

The parameter setting, the solid content and viscosity (in mPa·s) of the obtained aqueous safety coating slurry, and the adhesion (in N/m) of the aqueous safety coating to the current collector in Examples 1-13 and Comparative Examples 1-15 were shown in Table 1 (Examples) and Table 2 (Comparative Examples) below.

Adhesion Test Method of the aqueous safety coating: a rectangular strip of aluminum foil coated with the aqueous safety coating was cut to a width of 15 mm and a length of 250 mm. A transparent tape of the same width was then applied to the non-testing surface of the aluminum foil to prevent sample breakage during tearing. The transparent tape should be applied as smoothly as possible to reduce bubble formation and prevent shaking during testing. A steel plate with dimensions of length × width × thickness = 150 mm × 50 mm × 2 mm was taken, a double-sided tape was applied to one side (the double-sided tape was kept parallel to the edge of the steel plate, with a length of 60 mm) of it, and the release paper was removed. One end of the above strip was aligned with the exposed double-sided tape, with the overlapping length between the strip and the double-sided tape being the length of the tape. A 2 kg roller was then rolled back and forth three times over it to complete the preparation of the test sample. The adhesion test was conducted on a universal tensile testing machine. The lower part of the steel plate was placed in the lower testing fixture, and the part of the sample that was not attached to the double-sided tape vertically was aligned in the upper testing fixture, allowing the strip to rotate 180° during testing. The fixture was tightened, the test speed was set to 300 mm/min, and the test gauge length was set to 50 mm. The test was then started, and the reading was recorded.

**Table 1**

| | n₁ (%) | n₂ (%) | n₃ (%) | n₁/n ₂ | (n₁+n ₂)/n₃ | M_{w} (×1 0⁴) | Mₙ (×1 0⁴) | M_{w}/ Mₙ | Con tent of binder w | Content of conductive agent x | Solid content of slurry | Visco sity of slurry | Adhe sion |
|---|---|---|---|---|---|---|---|---|---|---|---|---|---|
| Example 1 | 50 | 35 | 15 | 1.43 | 5.67 | 35 | 18 | 1.9 | 10 | 2 | 20% | 750 | 1318 |
| Example 2 | 50 | 35 | 15 | 1.43 | 5.67 | 34 | 19 | 1.8 | 10 | 2 | 20% | 654 | 1211 |
| Example 3 | 50 | 35 | 15 | 1.43 | 5.67 | 30 | 18 | 1.7 | 10 | 2 | 20% | 732 | 1295 |
| Example 4 | 56.7 | 28.3 | 15 | 2.00 | 5.67 | 27 | 15 | 1.8 | 10 | 2 | 20% | 626 | 1189 |
| Example 5 | 46.4 | 38.6 | 15 | 1.20 | 5.67 | 31 | 16 | 1.9 | 10 | 2 | 20% | 689 | 1225 |
| Example 6 | 56 | 39.2 | 4.8 | 1.43 | 19.83 | 39 | 22 | 1.8 | 10 | 2 | 20% | 763 | 1352 |
| Example 7 | 49.1 | 34.3 | 16.6 | 1.43 | 5.02 | 29 | 20 | 1.5 | 10 | 2 | 20% | 752 | 1333 |
| Example 8 | 55 | 30 | 15 | 1.83 | 5.67 | 36 | 21 | 1.7 | 10 | 2 | 20% | 625 | 1214 |
| Example 9 | 53 | 37 | 10 | 1.43 | 9.00 | 34 | 20 | 1.7 | 10 | 2 | 21% | 563 | 1124 |
| Example 10 | 50 | 35 | 15 | 1.43 | 5.67 | 35 | 18 | 1.9 | 10 | 3 | 20% | 668 | 1231 |
| Example 11 | 50 | 35 | 15 | 1.43 | 5.67 | 35 | 18 | 1.9 | 10 | 1.5 | 20% | 721 | 1222 |
| Example 12 | 50 | 35 | 15 | 1.43 | 5.67 | 35 | 18 | 1.9 | 15 | 2 | 20% | 1253 | 1538 |
| Example 13 | 50 | 35 | 15 | 1.43 | 5.67 | 35 | 18 | 1.9 | 10 | 2 | 20% | 750 | 1318 |

**Table 2**

| | n₁ (%) | n₂ (%) | n₃ (%) | n₁/n ₂ | (n₁+n ₂)/n₃ | M_{w} (×1 0⁴) | Mₙ (×1 0⁴) | M_{w}/ Mₙ | Content of binder w | Content of conductive agent x | Solid content of slurry | Viscosity of slurry | Adhesion |
|---|---|---|---|---|---|---|---|---|---|---|---|---|---|
| Comparative Example 1 | 60 | 40 | 0 | 1.50 | / | 33 | 18 | 1.8 | 10 | 2 | 20% | 678 | 1256 |
| Comparative Example 2 | 0 | 70 | 30 | 0.00 | 2.33 | 26 | 15 | 1.7 | 10 | 2 | 20% | 452 | 85 |
| Comparative Example 3 | 75 | 0 | 25 | / | 3.00 | 31 | 20 | 1.6 | 10 | 2 | 20% | 559 | 887 |
| Comparative Example 4 | 42.5 | 42.5 | 15 | 1.00 | 5.67 | 32 | 22 | 1.5 | 10 | 2 | 20% | 326 | 82 |
| Comparative Example 5 | 65 | 20 | 15 | 3.25 | 5.67 | 38 | 23 | 1.7 | 10 | 2 | 20% | 995 | 1119 |
| Comparative Example 6 | 56.5 | 39.5 | 4 | 1.43 | 24.00 | 35 | 16 | 2.2 | 10 | 2 | 20% | 787 | 1223 |
| Comparative Example 7 | 29.4 | 20.6 | 50 | 1.43 | 1.00 | 41 | 18 | 2.3 | 10 | 2 | 20% | 385 | 88 |
| Comparative Example 8 | 50 | 35 | 15 | 1.43 | 5.67 | 50 | 10 | 5.0 | 10 | 2 | 20% | 550 | 453 |
| Comparative Example 9 | 50 | 35 | 15 | 1.43 | 5.67 | 35 | 18 | 1.9 | 10 | 6 | 20% | 516 | 525 |
| Comparative Example 10 | 50 | 35 | 15 | 1.43 | 5.67 | 35 | 18 | 1.9 | 10 | 0.2 | 20% | 736 | 856 |
| Comparative Example 11 | 50 | 35 | 15 | 1.43 | 5.67 | 35 | 18 | 1.9 | 10 | 2 | 28% | 1356 | 1089 |
| Comparative Example 12 | 50 | 35 | 15 | 1.43 | 5.67 | 35 | 18 | 1.9 | 0.53 | 2 | 20% | 56 | 71 |
| Comparative Example 13 | 50 | 35 | 15 | 1.43 | 5.67 | 35 | 18 | 1.9 | 25 | 2 | 20% | 1578 | / |
| Comparative Example 14 | / | / | / | / | / | / | / | / | 10 | 2 | 20% | 121 | 227 |
| Comparative Example 15 | / | / | / | / | / | / | / | / | / | / | / | / | / |

### Test Example

To verify the impact of the introduction of the aqueous safety coating on the performance of the battery cell, tests were conducted on electrolyte uptake rate c of the binder and the double-sided film resistance R of the aqueous safety coating, as well as the nail penetration, low-temperature discharge performance, rate performance, and cycling performance of the battery cell.

Electrolyte uptake rate test method: the binder solution was poured into a polytetrafluoroethylene dish and baked to evaporate the deionized water to form a binder polymer film with a thickness controlled at 100 µm, which was then cut into film pieces with dimensions of length × width = 50 mm × 50 mm. Subsequently, the film pieces were dried under vacuum for 24 hours, and then weighed. The completely dried film pieces were then immersed in electrolyte at 80°C for 12 hours, removed, and weighed after wiping off the electrolyte attached to the surface of the film. The increase rate (%) in weight of the film pieces before and after immersion in the electrolyte was the electrolyte uptake rate of the binder at 80°C.

Film resistance test method: the film resistance test was conducted using the ACCFILM film resistance testing system (Model: TT-ACCF-G2A) from Hangzhou Chuanyuan Technology Co., Ltd. The pressure was 0.4 t and the holding time of pressure was 10 s during the test.

Nail penetration test method: at room temperature, the battery cell was charged at a constant current and voltage of 1.0 C to 4.45 V, with a cutoff rate of 0.05 C. The fully charged battery cell was then subjected to a nail penetration test. During the test, the battery cell was placed with the deep pit surface facing up. A steel nail with a diameter of 4.0 mm was used to penetrate the battery cell completely at a speed of 40 mm/s at one time, with the penetrating positions located at the left, middle, and right of the largest face of the battery cell (5 battery cells tested at each position). If the battery cell did not catch fire or explode after maintaining for 1 hour, then it passed the test.

Low-temperature discharge performance test method: the battery cell was discharged at a constant current of 1 C to 3 V and allowed to rest for 5 minutes. The temperature chamber was set to 25°C and allowed to rest for 60 minutes. The battery cell was charged at a constant current and voltage of 1.0 C to 4.45 V, with a cutoff rate of 0.02 C, and allowed to rest for 5 minutes. The battery cell was then discharged at a constant current of 0.2 C to 3 V, and the capacity at this point was recorded as the initial capacity C₀. The temperature chamber was set to 25°C and allowed to rest for 60 minutes again. The battery cell was charged at a constant current and voltage of 1.0 C to 4.45 V, with a cutoff rate of 0.02 C, and allowed to rest for 5 minutes. The temperature chamber was then set to -10°C and allowed to rest for 120 minutes. Afterward, the battery cell was discharged at 0.2 C to 3.0 V, and the capacities C₁ and C₂ were recorded when discharging to 3.4 V and 3.0 V, respectively. The ratio of C₁ to C₀ was the capacity retention rate when discharging to 3.4 V at -10°C.

Rate discharge performance test method: the battery cell was discharged at a constant current of 1 C to 3 V and allowed to rest for 5 minutes. It was then charged at a constant current and voltage of 1.0 C to 4.45 V, with a cutoff rate of 0.02 C, and allowed to rest for 5 minutes. The battery cell was discharged at a constant current of 0.2 C to 3 V, and the capacity at this point was recorded as the initial capacity C₃. The battery cell was charged at a constant current and voltage of 1.0 C to 4.45 V, with a cutoff rate of 0.02 C, and allowed to rest for 5 minutes. Afterward, the battery cell was discharged at 0.2 C to 3.0 V, and the capacities C₄ and C₅ were recorded when discharging to 3.4 V and 3.0 V, respectively. The ratio of C₄ to C₃ was the capacity retention rate when discharging to 3.4 V at 2 C.

Cycling performance test method: under ambient temperature conditions of 25±2°C, the battery cell was discharged at a constant current of 0.2 C to 3.0 V, and then charged at a constant current and voltage of 3 C to 4.45 V, with a cutoff rate of 0.05 C. The voltage, internal resistance, capacity, and thickness (measured with 600 g PPG) of the first fully charged battery cell. The cycling process followed the HFC protocol as follows: the battery cell was subjected to discharging at a constant current of 0.2 C to 3 V; charging at a constant current of 3.0 C to 4.25 V; charging at a constant current of 2.5 C to 4.25 V; charging at a constant current of 2.0 C to 4.45 V; charging at a constant current and voltage of 1.4 C to 4.50 V with a cutoff rate of 0.3 C; charging at a constant current and voltage of 2 A to 4.45 V with a cutoff rate of 0.05 C; discharging at a constant current of 1.0 C to 3 V. Completing the above steps constituted one cycle. After 49 cycles, a low-current recovery was performed as follows: the battery cell was subjected to charging at a constant current of 3.0 C to 4.25 V; charging at a constant current of 2.5 C to 4.25 V; charging at a constant current of 2.0 C to 4.45 V; charging at a constant current and voltage of 1.4 C to 4.50 V with a cutoff rate of 0.3 C; charging at a constant current and voltage of 2 A to 4.45 V with a cutoff rate of 0.05 C; discharging at a constant current of 0.2 C to 3 V; charging at a constant current and voltage of 3.0 C to 4.45 V with a cutoff rate of 0.05 C. The voltage, internal resistance, and thickness (measured with 600 g PPG) of the fully charged battery cell were recorded every 100 cycles.

The secondary batteries obtained from Examples 1-13 and Comparative Examples 1-15 were tested, and the results were shown in Table 3 (Examples) and Table 4 (Comparative Examples).

**Table 3**

| | c | R (Ω) | d (µm) | R × d | Nail penetration | Low-temperature performance (3.4V @ -10°C) | Rate capability (3.4V @ 2.0C) | Cycling performance (RT @ 800 cycles) |
|---|---|---|---|---|---|---|---|---|
| Example 1 | 23% | 2.8 | 5.1 | 14.28 | 15/15 | 73.2% | 75.7% | 90.2% |
| Example 2 | 22% | 2.7 | 5.2 | 14.04 | 15/15 | 72.9% | 74.9% | 90.0% |
| Example 3 | 21% | 2.6 | 5.3 | 13.78 | 15/15 | 73.3% | 75.9% | 90.5% |
| Example 4 | 20% | 2.7 | 5.1 | 13.77 | 15/15 | 71.2% | 73.2% | 89.3% |
| Example 5 | 23% | 2.9 | 5 | 14.50 | 15/15 | 70.9% | 72.8% | 89.2% |
| Example 6 | 10% | 2.7 | 5.2 | 14.04 | 15/15 | 70.0% | 73.6% | 89.3% |
| Example 7 | 50% | 2.6 | 5.3 | 13.78 | 14/15 | 74.5% | 75.9% | 89.5% |
| Example 8 | 22% | 2.9 | 4.9 | 14.21 | 15/15 | 72.8% | 73.6% | 90.3% |
| Example 9 | 17% | 2.7 | 5.2 | 14.04 | 15/15 | 72.5% | 73.8% | 90.3% |
| Example 10 | 23% | 1.6 | 4.9 | 7.84 | 15/15 | 74.1% | 74.9% | 89.1% |
| Example 11 | 23% | 3.6 | 4.7 | 16.92 | 15/15 | 72.3% | 73.1% | 89.7% |
| Example 12 | 23% | 3.3 | 5.5 | 18.15 | 15/15 | 73.5% | 74.7% | 90.1% |
| Example 13 | 25% | 2.8 | 5.1 | 14.28 | 15/15 | 72.9% | 74.2% | 89.9% |

**Table 4**

| | c | R (Ω) | d (µm) | R×d | Nail penetration | Low-temperature performance (3.4V @ -10°C) | rate capability (3.4V @ 2.0C) | cycling performance (RT @ 800 cycles) |
|---|---|---|---|---|---|---|---|---|
| Comparative Example 1 | 3% | 2.7 | 5 | 13.50 | 15/15 | 31.3% | 39.8% | 81.1% |
| Comparative Example 2 | 65% | 2.3 | 4.9 | 11.27 | 3/15 | 25.5% | 27.1% | 51.1% |
| Comparative Example 3 | 57% | 2.8 | 5.2 | 14.56 | 12/15 | 55.6% | 42.2% | 82.5% |
| Comparative Example 4 | 24% | 2.5 | 4.8 | 12.00 | 5/15 | 66.6% | 68.1% | 86.9% |
| Comparative Example 5 | 22% | 4.2 | 5.3 | 22.26 | 15/15 | 67.9% | 69.7% | 87.5% |
| Comparative Example 6 | 4% | 2.7 | 4.9 | 13.23 | 15/15 | 35.8% | 46.2% | 86.6% |
| Comparative Example 7 | 76% | 2.6 | 5.1 | 13.26 | 6/15 | 71.8% | 72.3% | 87.2% |
| Comparative Example 8 | 24% | 2.7 | 4.9 | 13.23 | 12/15 | 70.1% | 73.4% | 89.2% |
| Comparative Example 9 | 23% | 0.3 | 5.2 | 1.56 | 5/15 | 75.1% | 76.2% | 90.1% |
| Comparative Example 10 | 23% | 12.1 | 4.7 | 56.87 | 15/15 | 42.3% | 45.2% | 78.8% |
| Comparative Example 11 | 23% | 3.3 | 15.9 | 52.47 | 15/15 | 67.2% | 69.1% | 88.5% |
| Comparative Example 12 | 23% | 2.3 | 4.9 | 11.27 | 4/15 | 66.5% | 68.2% | 85.8% |
| Comparative Example 13 | 23% | 3.9 | 6.2 | 24.18 | 15/15 | 63.6% | 65.1% | 84.5% |
| Comparative Example 14 | / | 3.5 | 4.9 | 17.15 | 15/15 | 72.3% | 73.5% | 90.0% |
| Comparative Example 15 | / | / | / | / | 0/15 | 69.1% | 69.5% | 89.6% |

The comparison of the test results in the above tables indicates that compared to Comparative Examples 1-15, the aqueous safety coatings in Examples 1-13 qualify the conditions of 2 ≤ R × d ≤ 50, 10% ≤ c ≤ 50%, 5 ≤ (x + z) / y ≤ 20, and 1.2 ≤ z / x ≤ 2. The corresponding battery cells show a significant increase in the nail penetration test pass rate, from 0% to over 90%. Additionally, improvements are also observed in low-temperature discharge performance, rate discharge performance, and cycling performance, comparable to the performances of the battery cell using conventional PVDF binders in oil-based primers and the performances of the battery cell having a separate ceramic layer in a non-aqueous safety coating area.

Examples 1-13 and Comparative Examples 1-3 demonstrate that the cyano, ester, and carboxylate groups in the binder are all essential groups. The absence of any of these groups leads to deterioration in battery cell performance.

Examples 1-13 and Comparative Examples 4-8 demonstrate that the values of x, y, z in the binder and the interrelationships thereof, as well as the ratio of M_{w} / Mₙ, all affect the aqueous safety coating. Deviating from the defined range in the present disclosure will lead to deterioration in battery cell performance.

Examples 1-13 and Comparative Examples 9-11 reveal that the unreasonable content of a conductive agent and the unreasonable solid content in the formulation of the aqueous coating slurry lead to R × d not falling within the range specified in the present disclosure, resulting in deterioration in battery cell performance. Comparative Examples 12-13 indicate that either too low or too high a binder amount results in poor battery cell performance.

In summary, the binder provided by the present disclosure achieves the objective of avoiding deteriorating the safety and cycling performance of the battery cell while enhancing the low-temperature discharge performance and rate discharge performance of the battery by limiting the proportion of -CN, -COOR₁ and -COOR₂ in the side chains of the PAA-type binder among all groups (-CN accounts for n₁ in all groups, -COOR₁ accounts for n₂ of all groups, and -COOR₂ accounts for n₃ of all groups), and the relative relationships among n1, n₂ and n₃, as well as limiting the electrolyte uptake rate c of the binder at 80°C and the double-sided film resistance R and double-sided thickness d of the aqueous safety coating. Under the conditions of 2 ≤ R × d ≤ 50, 10% ≤ c ≤ 50%, 5 ≤ (x + z) / y ≤ 20, and 1.2 ≤ z / x ≤ 2, the battery cell provided by the present disclosure can achieve a nail penetration pass rate of greater than 90%, while ensuring that the capacity retention rate after 800 cycles at 25°C is not less than 89%, and the discharge capacity at -10°C is not less than 70% @ 3.4 V, and the discharge capacity at 2.0 C is not less than 70% @ 3.4 V.

The examples described above only express several ways of implementing the present disclosure and are described in a specific and detailed manner, but should not be understood as a limitation on the patent scope of the present disclosure. It should be noted that for those skilled in the art, various modifications and improvements can be made without departing from the concept of the present disclosure, all of which fall within the protection scope of the present disclosure.

## Claims

1. A polyacrylate-based binder **characterized by** having a structural formula of 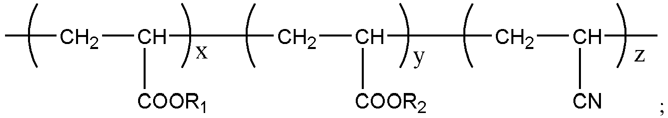
wherein R₁ is independently selected from the group consisting of H, Li, and Na each time it appears;
R₂ is independently selected from a substituted or unsubstituted C₁-C₁₀ alkyl each time it appears; and
5 ≤ (x + z) / y ≤ 20, 1.2 ≤ z / x ≤ 2, where x, y, and z are all not equal to 0.

2. The polyacrylate-based binder of claim 1, wherein a weight average molecular weight M_{w} of the polyacrylate-based binder ranges from 200,000 to 500,000, and a number average molecular weight Mₙ of the polyacrylate-based binder ranges from 100,000 to 400,000; and
a ratio of the weight average molecular weight M_{w} of the polyacrylate-based binder to the number average molecular weight Mₙ of the polyacrylate-based binder is M_{w} / Mₙ ≤ 3.

3. The polyacrylate-based binder of claim 1, wherein an electrolyte uptake rate of the polyacrylate-based binder at 80 °C ranges from 10% to 50%.

4. An aqueous safety coating, **characterized in that** raw materials of the aqueous safety coating comprise the polyacrylate-based binder of any one of claims 1 to 3, a first conductive agent, and an inorganic filler.

5. The aqueous safety coating of claim 4, wherein the polyacrylate-based binder accounts for 1% to 24% by mass of the aqueous safety coating.

6. The aqueous safety coating of claim 4, wherein the aqueous safety coating comprises at least one of the following:
A1) a mass ratio of the first conductive agent to the polyacrylate-based binder to the inorganic filler is (0.5 to 5): (1 to 24): (71 to 98.5);
A2) the first conductive agent accounts for 0.5% to 5% by mass of the aqueous safety coating;
A3) the inorganic filler has a median particle size ranging from 0.2 µm to 4 µm, and a specific surface area ranging from 5 m²/g to 50 m²/g;
A4) the raw materials of the aqueous safety coating further comprise a thermally stable active material;
A5) when comprising A4), a mass ratio of the first conductive agent to the polyacrylate-based binder to the inorganic filler to the thermally stable active material is (0.5 to 5): (1 to 24): (1 to 97.5): (1 to 97.5);
A6) when comprising A4), the thermally stable active material comprises one or both of lithium iron phosphate and lithium manganese phosphate.

7. An electrode sheet **characterized by** comprising:
a current collector;
an active material layer;
the aqueous safety coating of any one of claims 4 to 6.

8. The electrode sheet of claim 7, wherein the aqueous safety coating is applied on at least one side surface of the current collector, and the active material layer is applied on the side surface of the aqueous safety coating that is away from the current collector, and/or on the side surface of the current collector that is away from the aqueous safety coating; or
the active material layer is applied on at least one side surface of the current collector, and the aqueous safety coating is applied on the side surface of the active material layer that is away from the current collector and/or on the side surface of the current collector that is away from the active material layer.

9. The electrode sheet of claim 8, wherein the aqueous safety coating is applied on both side surfaces of the current collector; and the aqueous safety coating comprises at least one of the following:
B1) a double-sided thickness of the aqueous safety coating ranges from 1 µm to 20 µm;
B2) a double-sided coating surface density of the aqueous safety coating ranges from 2 mg/1540.25mm² to 35 mg/1540.25mm²;
B3) a double-sided film resistance of the aqueous safety coating tested under a pressure of 0.4 t ranges from 0.5 Ω to 5 Ω;
B4) a double-sided thickness d of the aqueous safety coating and the double-sided film resistance R under a pressure of 0.4 t qualifies a condition of 2 ≤ R × d ≤ 50;
B5) along a direction perpendicular to the unwinding of the current collector, a distance W_{A1} between the left edge of the aqueous safety coating on surface A of the current collector and the left edge of the current collector ranges from 2 mm to 30 mm, and a distance W_{A2} between the right edge of the aqueous safety coating on surface A of the current collector and the right edge of the current collector ranges from 2 mm to 30 mm; a distance W_{B1} between the left edge of the aqueous safety coating on surface B of the current collector and the left edge of the current collector ranges from 3 mm to 30 mm, and a distance W_{B2} between the right edge of the aqueous safety coating on surface B and the right edge of the current collector ranges from 3 mm to 30 mm; and W_{B1} - W_{A1} ≥ 1 mm, W_{B2} - W_{A2} ≥ 1mm.

10. A method for preparing the electrode sheet of any one of claims 7-9, **characterized by** comprising the steps of:
mixing the polyacrylate-based binder with water for mixing to obtain a glue solution;
uniformly mixing the first conductive agent and the inorganic filler with the glue solution, or uniformly mixing the first conductive agent, the thermally stable active material, and the inorganic filler with the glue solution to obtain an aqueous safety coating slurry;
applying the aqueous safety coating slurry onto one or both side surfaces of the current collector, or onto a side surface of the active material layer that is away from the current collector, to obtain the electrode sheet.

11. The method for preparing the electrode sheet of claim 10, wherein the method comprises at least one of the following:
C1) a mass ratio of the first conductive agent to the polyacrylate-based binder to the inorganic filler is (0.5 to 5): (1 to 24): (71 to 98.5);
C2) a solid content of the glue solution ranges from 10% to 30%;
C3) a viscosity of the glue solution ranges from 1×10³ mPa·s to 3×10⁴ mPa·s;
C4) a solid content of the aqueous safety coating slurry is ≥ 10%;
C5) a viscosity of the aqueous safety coating slurry is ≥ 50 mPa·s;
C6) a dyne value of the current collector is ≥ 30 dyn/cm;
C7) the aqueous safety coating slurry is applied onto one or both side surfaces of the current collector, or onto a side surface of the active material layer that is away from the current collector, by means of gravure printing;
C8) when comprising C7), a temperature of the oven during gravure printing ranges from 90 °C to 110 °C, and a printing speed ranges from 10 m/min to 50 m/min;
C9) a mass ratio of the first conductive agent to the polyacrylate-based binder to the inorganic filler to the thermally stable active material is (0.5 to 5): (1 to 24): (1 to 97.5): (1 to 97.5).

12. A lithium-ion battery **characterized by** comprising a cathode sheet, an anode sheet, and a separator spaced between the cathode sheet and the anode sheet; and the cathode sheet and/or the anode sheet is the electrode sheet of any one of claims 7-9 or the electrode sheet prepared by the method of any one of claims 10-11.

13. Use of the lithium-ion battery of claim 12 in an energy storage device, a power device, or an electronic device.
